(19) Europäisches Patentamt
European Patent Office
Office européen des brevets

(11) **EP 3 961 624 B1**

(12) **EUROPÄISCHE PATENTSCHRIFT**

(45) Veröffentlichungstag und Bekanntmachung des Hinweises auf die Patenterteilung:
**25.09.2024 Patentblatt 2024/39**

(21) Anmeldenummer: **21190919.7**

(22) Anmeldetag: **12.08.2021**

(51) Internationale Patentklassifikation (IPC):
*H04R 25/00* (2006.01)   *G10L 25/60* (2013.01)
*G10L 21/0364* (2013.01)   *G10L 25/78* (2013.01)

(52) Gemeinsame Patentklassifikation (CPC):
**H04R 25/505; G10L 21/0364; G10L 25/60;**
G10L 25/78; H04R 25/356; H04R 2225/43

(54) **VERFAHREN ZUM BETRIEB EINER HÖRVORRICHTUNG IN ABHÄNGIGKEIT EINES SPRACHSIGNALS**

METHOD FOR OPERATING A HEARING AID DEPENDING ON A SPEECH SIGNAL

PROCÉDÉ DE FONCTIONNEMENT D'UN DISPOSITIF AUDITIF EN FONCTION D'UN SIGNAL VOCAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.08.2020 DE 102020210918**
**28.08.2020 DE 102020210919**

(43) Veröffentlichungstag der Anmeldung:
**02.03.2022 Patentblatt 2022/09**

(73) Patentinhaber: **Sivantos Pte. Ltd.**
**Singapore 539775 (SG)**

(72) Erfinder:
• **BEST, Sebastian**
**91054 Erlangen (DE)**
• **LUGGER, Marko**
**91365 Weilersbach (DE)**

(74) Vertreter: **FDST Patentanwälte**
**Nordostpark 16**
**90411 Nürnberg (DE)**

(56) Entgegenhaltungen:
**US-A1- 2004 167 774    US-A1- 2018 255 406**
**US-B2- 7 165 025**

• **ASGER HEIDEMANN ANDERSEN ET AL: "Nonintrusive Speech Intelligibility Prediction Using Convolutional Neural Networks", IEEE/ACM TRANSACTIONS ON AUDIO, SPEECH, AND LANGUAGE PROCESSING, IEEE, USA, vol. 26, no. 10, 1 October 2018 (2018-10-01), pages 1925 - 1939, XP058416624, ISSN: 2329-9290, DOI: 10.1109/TASLP.2018.2847459**

**Beschreibung**

Die Erfindung betrifft ein Verfahren zum Betrieb einer Hörvorrichtung in Abhängigkeit eines Sprachsignals, wobei mittels eines akusto-elektrischen Eingangswandlers der Hörvorrichtung ein das Sprachsignal enthaltender Schall aus einer Umgebung der Hörvorrichtung aufgenommen und in ein Eingangs-Audiosignal umgewandelt wird, wobei mittels einer Signalverarbeitung anhand des Eingangs-Audiosignals ein Ausgangs-Audiosignal erzeugt wird, welches durch einen elektro-akustischen Ausgangswandler in einen Ausgangsschall gewandelt wird, wobei wenigstens ein Parameter der Signalverarbeitung zur Erzeugung des Ausgangs-Audiosignals anhand des Eingangs-Audiosignals in Abhängigkeit des Sprachsignals eingestellt wird.

Eine wichtige Aufgabe in der Anwendung von Hörvorrichtungen, wie z.B. von Hörgeräten, aber auch von Headsets oder Kommunikationsgeräten, besteht oftmals darin, ein Sprachsignal möglichst präzise, also insbesondere akustisch möglichst verständlich an einen Benutzer der Hörvorrichtung auszugeben. Oftmals werden hierzu in einem Audiosignal, welches anhand eines Schalls mit einem Sprachsignal erzeugt wird, Störgeräusche aus dem Schall unterdrückt, um die Signalanteile, welche das Sprachsignal repräsentieren, hervorzuheben und somit dessen Verständlichkeit zu verbessern. Oftmals kann jedoch durch Algorithmen zur Rauschunterdrückung die Klangqualität eines resultierenden Ausgangssignals verringert werden, wobei durch eine Signalverarbeitung des Audiosignals insbesondere Artefakte entstehen können, und/oder ein Höreindruck generell als weniger natürlich empfunden wird.

Meist wird eine Rauschunterdrückung hierbei anhand von Kenngrößen durchgeführt, welche vorrangig das Rauschen oder das Gesamtsignal betreffen, also z.B. ein Signal-zu-Rausch-Verhältnis ("signal-to-noise-ratio", SNR), ein Grundrauschpegel ("noise foor"), oder auch einen Pegel des Audiosignals. Dieser Ansatz für eine Steuerung der Rauschunterdrückung kann jedoch letztlich dazu führen, dass die Rauschunterdrückung auch dann angewandt wird, wenn dies, obwohl merkliche Störgeräusche vorliegen, infolge von trotz der Störgeräusche weiter gut verständlichen Sprachanteilen gar nicht erforderlich wäre. In diesem Fall wird das Risiko einer nachlassenden Klangqualität, z.B. durch Artefakte der Rauschunterdrückung, ohne echte Notwendigkeit eingegangen. Umgekehrt kann ein Sprachsignal, welches nur von geringem Rauschen überlagert ist, und insofern das zugehörige Audiosignal ein gutes SNR aufweist, bei einer schwachen Artikulation des Sprechers (z.B. wenn dieser nuschelt o.ä.) auch eine geringe Sprachqualität aufweisen.

Die US 2018 / 0 255 406 A1 nennt ein Hörgerät, das eine Anzahl an Mikrofonen mit einem ersten Mikrofon zum Erzeugen eines ersten Mikrofoneingangssignals sowie und einen Prozessor zum Verarbeiten von Eingangssignalen zu einem elektrischen Ausgangssignal umfasst. Das Hörgerät umfasst weiter einen Receiver zum Umwandeln des elektrischen Ausgangssignals in ein Ausgangsschallsignal und eine Steuereinheit, die operativ mit der Anzahl an Mikrofonen verbunden ist, wobei die Steuereinheit basierend auf einem oder mehreren Mikrofoneingangssignale einen Indikator einer Sprachverständlichkeit schätzt. Die Steuereinheit ist weiter dazu eingerichtet, den Prozessor basierend auf dem Indikator der Sprachverständlichkeit zu steuern. Für das Schätzen des besagten Indikators wird ein Tonhöhenparameter einer ersten Audioquelle geschätzt. Der Indikator der Sprachverständlichkeit basiert auf dem Tonhöhenparameter und einer Richtung der ersten Audioquelle.

Die US 7,165,025 nennt eine Artikulationsanalyse zur Verwendung bei der Sprachqualitätsbewertung. Die Artikulationsanalyse basiert auf einem Vergleich zwischen Leistungen von Artikulations- und Nicht-Artikulations-Frequenzbereichen eines Sprachsignals, wobei die Sprachqualität basierend auf dem besagten Vergleich bewertet wird. Weder das Ausgangssprachsignal noch eine Schätzung desselben wird in der Artikulationsanalyse verwendet.

In A. H. Andersen et al., "Nonintrusive Speech Intelligibility Prediction Using Convolutional Neural Networks", IEEE/ACM Transactions on Audio, Speech and Language Processing, IEEE, USA, Bd. 26, Nr. 10, 01.10.2018, Seiten 1925-1939, wird ein sog. Convolutional Neural Network (CNN) für eine nicht-intrusive Vorhersage der Sprachverständlichkeit ("Speech Intelligibility Prediction", SIP), welche kein sauberes (also rauschfreies) Sprachsignal für Vorhersagen benötigt. Die verwendete CNN-Architektur weist dabei Ähnlichkeit zu bestehenden SIP-Algorithmen auf, wodurch die trainierten Gewichte des CNN einfach und aussagekräftig zu interpretieren sind. Die vorgeschlagene Methode zeigt eine hohe Vorhersageleistung im Vergleich zu bestehenden intrusiven und nicht-intrusiven SIP-Algorithmen. Dies demonstriert das Potenzial von Deep Learning für die Vorhersage der Sprachverständlichkeit Vorhersage.

Die US 2004 / 0 167 774 A1 nennt ein Verfahren zum Analysieren und Bewerten von Stimmen. Hierbei wird ein Testsprachsignal unter Verwendung eines Hörmodells verarbeitet, wenigstens ein Merkmal einer Sprachqualität aus dem Testsprachsignal ermittelt, und das besagte Merkmal der Sprachqualität mit einem entsprechenden Basis-Merkmal der Sprachqualität. Darauf basierend kann ein Maß für eine Sprachqualität des Testsprachsignals ermittelt werden.

Der Erfindung liegt daher die Aufgabe zugrunde, ein Verfahren anzugeben, mittels dessen eine Hörvorrichtung in Abhängigkeit von einem möglichst objektiven Maß für eine Sprachqualität eines Sprachsignals betrieben werden kann. Der Erfindung liegt weiter die Aufgabe zugrunde, eine Hörvorrichtung anzugeben, welche zu einem Betrieb in Abhängigkeit einer Sprachqualität eines Sprachsignals eingerichtet ist.

Die erstgenannte Aufgabe wird erfindungsgemäß gelöst durch ein Verfahren zum Betrieb einer Hörvorrichtung in Abhängigkeit eines Sprachsignals, wobei mittels eines akusto-elektrischen Eingangswandlers der Hörvorrichtung ein das Sprachsignal enthaltender Schall aus einer Umgebung der Hörvorrichtung aufgenommen und in ein Eingangs-Audiosignal umgewandelt wird, wobei mittels einer Signalverarbeitung anhand des Eingangs-Audiosignals ein Ausgangs-Audiosignal erzeugt wird, wobei durch eine Analyse des Eingangs-Audiosignals mittels der Signalverarbeitung mindestens eine artikulatorische Eigenschaft des Sprachsignals quantitativ erfasst wird, und in Abhängigkeit der besagten Eigenschaft ein quantitatives Maß für eine Sprachqualität des Sprachsignals abgeleitet wird, und wobei wenigstens ein Parameter der Signalverarbeitung zur Erzeugung des Ausgangs-Audiosignals anhand des Eingangs-Audiosignals in Abhängigkeit des quantitativen Maßes für die Sprachqualität des Sprachsignals eingestellt wird.

Hierbei ist vorgesehen, dass für das quantitative Maß für die Sprachqualität als artikulatorische Eigenschaft des Sprachsignals eine mit der Präzision von vorgegebenen Formanten von Vokalen in dem Sprachsignal korrelierte Kenngröße, und/oder eine mit der Dominanz von Konsonanten, insbesondere Frikativen und/oder Plosiven, in dem Sprachsignal korrelierte Kenngröße und/oder eine mit der Präzision von Übergängen von stimmhaften und stimmlosen Lauten korrelierte Kenngröße erfasst wird. Vorteilhafte und teils für sich gesehen erfinderische Ausgestaltungen sind Gegenstand der Unteransprüche und der nachfolgenden Beschreibung.

Die zweitgenannte Aufgabe wird erfindungsgemäß gelöst durch eine Hörvorrichtung, umfassend einen akusto-elektrischen Eingangswandler, welcher dazu eingerichtet ist, einen Schall aus einer Umgebung der Hörvorrichtung aufzunehmen und in ein Eingangs-Audiosignal umzuwandeln, eine Signalverarbeitungseinrichtung, welche dazu eingerichtet ist, aus dem Eingangs-Audiosignal ein Ausgangs-Audiosignal zu erzeugen, wobei die Hörvorrichtung zur Durchführung des Verfahrens nach einem der vorhergehenden Ansprüche eingerichtet ist.

Die erfindungsgemäße Hörvorrichtung teilt die Vorzüge des erfindungsgemäßen Verfahrens, welches insbesondere mittels der erfindungsgemäßen Hörvorrichtung durchführbar ist. Die für das Verfahren und für seine Weiterbildungen nachfolgend genannten Vorteile können hierbei sinngemäß auf die Hörvorrichtung übertragen werden.

Bevorzugt wird im erfindungsgemäßen Verfahren das Ausgangs-Audiosignal durch einen elektro-akustischen Ausgangswandler in einen Ausgangsschall gewandelt wird. Bevorzugt weist die erfindungsgemäße Hörvorrichtung einen elektro-akustischen Ausgangswandler auf, welcher dazu eingerichtet ist, das Ausgangs-Audiosignal in einen Ausgangsschall umzuwandeln.

Unter einem akusto-elektrischen Eingangswandler ist hierbei insbesondere jedweder Wandler umfasst, welcher dazu eingerichtet ist, aus einem Schall der Umgebung ein elektrisches Audiosignal zu erzeugen, sodass durch den Schall hervorgerufene Luftbewegungen und Luftdruckschwankungen am Ort des Wandlers durch entsprechende Oszillationen einer elektrischen Größe, insbesondere einer Spannung im erzeugten Audiosignal wiedergegeben werden. Insbesondere kann der akusto-elektrische Eingangswandler durch ein Mikrofon gegeben sein. Entsprechend ist unter einem elektro-akustischer Ausgangswandler jedweder Wandler umfasst, welcher dazu eingerichtet ist, aus einem elektrischen Audiosignal einen Ausgangsschall zu erzeugen, also insbesondere ein einen Lautsprecher (wie etwa ein Balanced Metal Case Receiver), aber auch ein Knochenleithörer o.ä.

Die Signalverarbeitung erfolgt insbesondere mittels einer entsprechenden Signalverarbeitungseinrichtung, welche mittels wenigstens eines Signalprozessors zur Durchführung der für die Signalverarbeitung vorgesehenen Berechnungen und/oder Algorithmen eingerichtet ist. Die Signalverarbeitungseinrichtung ist dabei insbesondere auf der Hörvorrichtung angeordnet. Die Signalverarbeitungseinrichtung kann jedoch auch auf einer Hilfsvorrichtung angeordnet sein, welche für eine Verbindung mit der Hörvorrichtung zum Datenaustausch eingerichtet ist, also z.B. ein Smartphone, eine Smartwatch o.ä. Die Hörvorrichtung kann dann z.B. das Eingangs-Audiosignal an die Hilfsvorrichtung übertragen, und die Analyse wird mittels der durch die Hilfsvorrichtung bereitgestellten Rechenressourcen durchgeführt. Abschließend kann als Ergebnis der Analyse das quantitative Maß für die Sprachqualität an die Hörvorrichtung zurück übertragen werden, und dort entsprechend der wenigstens eine Parameter der Signalverarbeitung eingestellt werden.

Die Analyse kann dabei direkt am Eingangs-Audiosignal durchgeführt werden, oder anhand eines vom Eingangs-Audiosignal abgeleiteten Signals. Ein solches kann hierbei insbesondere durch den isolierten Sprachsignalanteil gegeben sein, aber auch durch ein Audiosignal, wie es z.B. in einer Hörvorrichtung durch eine Rückkopplungsschleife mittels eines Kompensationssignals zur Kompensation einer akustischen Rückkopplung erzeugt werden kann o.ä., oder durch ein Richtsignal, welches anhand eines weiteren Eingangs-Audiosignals eines weiteren Eingangswandlers erzeugt wird.

Unter einer artikulatorischen Eigenschaft des Sprachsignals sind hierbei eine Präzision von Formanten, besonders von Vokalen, sowie eine Dominanz von Konsonanten, besonders von Frikativen und/oder Plosiven, umfasst. Hierbei lässt sich die Aussage treffen, dass eine Sprachqualität als umso höher anzusetzen ist, je höher die Präzision der Formanten ist bzw. je höher die Dominanz und/oder die Präzision von Konsonanten ist.

Klangerzeugung umfasst üblicherweise drei physikalische Bestandteile einer Schallquelle: Einen mechanischen Oszillator wie z.B. eine Saite oder Membran, welcher eine den Oszillator umgebende Luft in Schwingungen versetzt, eine Anregung des Oszillators (z.B.

durch ein Zupfen oder Streichen), und einen Resonanzkörper. Der Oszillator wird durch die Anregung in Oszillationen versetzt, sodass die den Oszillator umgebende Luft durch die Schwingungen des Oszillators in Druckschwingungen versetzt wird, welche sich als Schallwellen ausbreiten. Hierbei werden im mechanischen Oszillator meist nicht nur Schwingungen einer einzigen Frequenz angeregt, sondern Schwingungen verschiedener Frequenzen, wobei die spektrale Zusammensetzung der propagierenden Schwingungen das Klangbild bestimmt. Die Frequenzen von bestimmten Schwingungen sind dabei oft als ganzzahlige Vielfache einer Grundfrequenz gegeben, und werden als "Harmonische" oder als Obertöne dieser Grundfrequenz bezeichnet. Es können sich jedoch auch komplexere spektrale Muster herausbilden, sodass nicht alle erzeugten Frequenzen als Harmonische derselben Grundfrequenz darstellbar sind. Für das Klangbild ist hierbei auch die Resonanz der erzeugten Frequenzen im Resonanzraum relevant, da oftmals bestimmte, vom Oszillator erzeugte Frequenzen im Resonanzraum relativ zu den dominanten Frequenzen eines Klangs abgeschwächt werden.

Auf die menschliche Stimme angewandt bedeutet dies, dass der mechanische Oszillator gegeben ist durch die Stimmbänder, und deren Anregung in der aus den Lungen an den Stimmbändern vorbeiströmenden Luft, wobei der Resonanzraum v.a. durch den Rachen- und Mundraum gebildet wird. Die Grundfrequenz einer männlichen Stimme liegt dabei meist im Bereich von 60 Hz bis 150 Hz, für Frauen meist im Bereich von 150 Hz bis 300 Hz. Infolge der anatomischen Unterschiede zwischen einzelnen Menschen sowohl hinsichtlich ihrer Stimmbänder, als auch insbesondere hinsichtlich des Rachen- und Mundraums bilden sich zunächst unterschiedliche klingende Stimmen aus. Durch eine Veränderung des Volumens und der Geometrie des Mundraums durch entsprechende Kiefer- und Lippenbewegungen kann dabei der Resonanzraum derart verändert werden, dass sich für die Erzeugung von Vokalen charakteristische Frequenzen ausbilden, sog. Formanten. Diese liegen jeweils für einzelne Vokale in unveränderlichen Frequenzbereichen (den sog. "Formantenbereichen"), wobei ein Vokal meist durch die ersten zwei Formanten F1 und F2 einer Reihe von oftmals vier Formanten bereits klar hörbar gegen andere Laute abgegrenzt ist (vgl. "Vokaldreieck" und "Vokaltrapez"). Die Formanten bilden sich hierbei unabhängig von der Grundfrequenz, also der Frequenz der Grundschwingung aus.

Unter einer Präzision von Formanten ist in diesem Sinn insbesondere ein Grad einer Konzentration der akustischen Energie auf voneinander abgrenzbare Formantenbereiche, insbesondere jeweils auf einzelne Frequenzen in den Formantenbereichen, und eine hieraus resultierende Bestimmbarkeit der einzelnen Vokale anhand der Formanten zu verstehen.

Für ein Erzeugung von Konsonanten wird der an den Stimmbändern vorbeiströmende Luftstrom an wenigstens einer Stelle teilweise oder ganz blockiert, wodurch u.a. auch Turbulenzen des Luftstroms gebildet werden, weswegen nur manchen Konsonanten eine ähnlich klare Formantenstruktur zugeordnet werden kann wie Vokalen, und andere Konsonanten eine eher breitbandige Frequenzstruktur aufweisen. Jedoch lassen sich auch Konsonanten bestimmte Frequenzbänder zuordnen, in welchen die akustische Energie konzentriert ist. Diese liegen infolge der eher perkussiven "Geräuschartigkeit" von Konsonanten allgemein oberhalb der Formantenbereiche von Vokalen, nämlich vorrangig im Bereich von ca. 2 bis 8 kHz, während die Bereiche der wichtigsten Formanten F1 und F2 von Vokalen allgemein bei ca. 1,5 kHz (F1) bzw. 4 kHz (F2) enden. Die Präzision von Konsonanten bestimmt sich dabei insbesondere aus einem Grad der Konzentration der akustischen Energie auf die entsprechenden Frequenzbereiche und eine hieraus resultierende Bestimmbarkeit der einzelnen Konsonanten.

Die Unterscheidbarkeit der einzelnen Bestandteile eines Sprachsignals, und damit die Möglichkeit, diese Bestandteile auflösen zu können, hängt jedoch nicht nur ab von artikulatorischen Aspekten. Während diese vorrangig die akustische Präzision der kleinsten isolierten Klangereignisse von Sprache, der sog. Phoneme, betreffen, bestimmten auch prosodische Aspekte die Sprachqualität, da hier durch Intonation und Akzentsetzung insbesondere über mehrere Segmente, also mehrere Phoneme oder Phonemgruppen hinweg, einer Aussage ein besonderer Sinn aufgeprägt werden kann, wie z.B. durch das Anheben der Tonhöhe am Satzende zum Verdeutlichen einer Frage, oder durch das Betonen einer konkreten Silbe in einem Wort zur Unterscheidung verschiedener Bedeutungen (vgl. "umfahren" vs. "umfahren") oder das Betonen eines Wortes zu seiner Hervorhebung. Insofern lässt sich eine Sprachqualität für ein Sprachsignal auch anhand prosodischer Eigenschaften, insbesondere wie den eben genannten, quantitativ erfassen, indem z.B. Maße für eine zeitliche Variation der Tonhöhe der Stimme, also ihrer Grundfrequenz, und für die Deutlichkeit einer Abhebung der Amplituden- und/oder Pegelmaxima bestimmt werden.

Anhand einer oder mehrerer der genannten und/oder weiterer, quantitativ erfassten artikulatorischen Eigenschaften des Sprachsignals lässt sich somit das quantitative Maß für die Sprachqualität ableiten, und in Abhängigkeit dieses Maßes eine Steuerung der Signalverarbeitung vornehmen. Das quantitative Maß für die Sprachqualität bezieht sich dabei also auf die Sprachproduktion eines Sprechers, welcher von einer als "sauber" empfundenen Aussprache Defizite (wie z.B. Lispeln oder Nuscheln) bis hin zu Sprachfehlern aufweisen kann, welche die Sprachqualität entsprechend reduzieren.

Im Unterschied zu Größen, welche auf eine Propagation der Sprache in einer Umgebung bezogen sind, wie z.B. der Sprachverständlichkeitsindex ("Speech Intelligibility Index", SII), welcher bandweise die einzelnen Sprach- und Rauschanteile gewichtet, oder der Sprachübertragungsindex ("Speech Transmission Index", STI), welcher mittels eines die Modulationen de menschlichen Sprache nachbildenden Testsignals die Auswirkung eines Übertragungskanals auf die Modulationstiefe erfasst, ist hier das vorliegende Maß für die dabei insbesondere unabhängig von den externen Eigenschaften eines Übertragungskanals wie z.B. einer Propagation in einem möglicherweise nachhallenden Raum oder einer lauten Umgebung, sondern bevorzugt nur abhängig von den intrinsischen Eigenschaften der Spracherzeugung durch den Sprecher.

Dies bedeutet insbesondere, dass in leisen Umgebungen und/oder Umgebungen mit nur geringem Rauschhintergrund eine reduzierte Sprachqualität (bezogen auf einen Referenzwert, welcher bevorzugt für als "sehr gut" empfundenen Sprachqualität festgelegt wird) erkannt und mittels der Signalverarbeitung korrigiert wird. Dies gilt insbesondere in Situationen, in welchen eigentlich ein gutes SNR vorliegt, und somit keine oder nur wenig Bearbeitung des Eingangs-Audiosignals durch die Signalverarbeitung erforderlich wäre (ggf. mit Ausnahme einer audiologisch bedingten, zum Ausgleich einer Hörschwäche eines Benutzers der Hörvorrichtung entsprechend individuell abgestimmten Signalverarbeitung), so dass eine schwache Sprachqualität eines im Eingangs-Audiosignal enthaltenen Sprachsignals gezielt durch die Signalverarbeitung verbessert werden kann. Hierbei kann als der wenigstens eine Parameter eine oder mehrere der folgenden Steuergrößen eingestellt werden: Ein Verstärkungsfaktor (breitbandig oder frequenzbandabhängig), ein Kompressionsverhältnis bzw. ein Kniepunkt einer breitbandigen oder frequenzbandabhängigen Kompression, eine Zeitkonstante einer automatischen Verstärkungsregelung, eine Stärke einer Rauschunterdrückung, eine Richtwirkung eines Richtsignals.

Bevorzugt wird als der wenigstens eine Parameter der Signalverarbeitung ein Verstärkungsfaktor, und/oder ein Kompressionsverhältnis, und/oder ein Kniepunkt einer Kompression, und/oder eine Zeitkonstante einer automatischen Verstärkungsregelung ("Automatic Gain Control", AGC), und/oder eine Stärke einer Rauschunterdrückung, und/oder eine Richtwirkung eines Richtsignals in Abhängigkeit des quantitativen Maßes für die Sprachqualität des Sprachsignals eingestellt. Insbesondere kann hierbei der Parameter auch als ein frequenzabhängiger Parameter gegeben sein, also z.B. ein Verstärkungsfaktor eines Frequenzbandes, eine frequenzabhängige Kompressionsgröße (Kompressionsverhältnis, Kniepunkt, Attack, oder Release) einer Multiband-Kompression, ein frequenzbandweiser Richtparameter eines Richtsignals. Durch die genannten Steuergrößen lässt sich eine unzureichende Sprachqualität insbesondere bei an sich geringem Rauschen (bzw. hohem SNR) noch weiter verbessern.

Günstigerweise wird dabei der Verstärkungsfaktor erhöht, bzw. das Kompressionsverhältnis erhöht, bzw. der Kniepunkt der Kompression abgesenkt, bzw.

die Zeitkonstante verkürzt, bzw. die Rauschunterdrückung abgeschwächt, bzw. die Richtwirkung erhöht, wenn das quantitative Maß eine Verschlechterung der Sprachqualität indiziert.

Insbesondere kann für eine Verbesserung der Sprachqualität, indiziert durch eine entsprechende Veränderung des quantitativen Maßes (zu einem "besseren" binären Wert hin oder zu einem "besseren" Wertebereich hin im kontinuierlichen oder diskretisierten Fall), die entgegengesetzte Maßnahme getroffen werden, also der Verstärkungsfaktor abgesenkt, bzw. das Kompressionsverhältnis verringert, bzw. der Kniepunkt der Kompression erhöht, bzw. die Zeitkonstante verlängert, bzw. die Rauschunterdrückung erhöht, bzw. die Richtwirkung verringert werden.

Gerade für die Wiedergabe von Sprache durch eine Hörvorrichtung wird meist versucht, ein Sprachsignal in einem Bereich von bevorzugt 55 dB bis 75 dB, besonders bevorzugt 60 dB bis 70 dB auszugeben, da unterhalb dieses Bereiches die Verständlichkeit der Sprache beeinträchtigt werden kann, und oberhalb dieses Bereiches der Schallpegel bereits von vielen Menschen als unangenehm empfunden wird, und zudem durch eine weitere Verstärkung keine weitere Verbesserung mehr erreicht wird. Daher kann bei unzureichender Sprachqualität die Verstärkung moderat über einen eigentlich für ein "normal verständliches" Sprachsignal vorgesehenen Wert angehoben werden, und bei besonders guter Sprachqualität ein ggf. sehr lautes Sprachsignal etwas abgesenkt werden.

Eine Kompression eines Audiosignals führt zunächst dazu, dass oberhalb eines sog. Kniepunktes der Kompression mit zunehmendem Signalpegel dieser zunehmend um das sog. Kompressionsverhältnis abgesenkt wird. Ein höheres Kompressionsverhältnis bedeutet dabei eine geringere Verstärkung bei zunehmendem Signalpegel. Die relative Verringerung der Verstärkung für Signalpegel oberhalb des Kniepunktes erfolgt hierbei meist mit einer Einregel- bzw. Reaktionszeit ("attack"), wobei nach einer Ausregelzeit ("release") mit Signalpegeln ohne Überschreitung des Kniepunktes die Kompression wieder zurückgenommen wird.

Oberhalb des Kniepunktes kp lässt sich der Pegel Pout des Ausgangssignals in Abhängigkeit des Eingangspegels Pin jedoch folgendermaßen bestimmen (alle pegelwerte sind in dB zu nehmen):

$$\text{Pout (dB)} = [\text{Pin (dB)} - \text{kp (dB)}] / r + kp,$$

wobei r das Kompressionsverhältnis ist. Ein Kompressionsverhältnis vom 2:1 bedeutet somit, dass oberhalb des Kniepunktes kp bei einer Zunahme eines Eingangspegels von 10 dB der Ausgangspegel nur um weitere 5 dB ansteigt.

Eine derartige Kompression wird üblicherweise angewandt, um Pegelspitzen abzufangen, und somit das gesamte Audiosignal mehr verstärken zu können, ohne dass die Pegelspitzen zu einem Übersteuern und somit zu einer Verzerrung des Audiosignals führen. Wird also bei einer Verschlechterung der Sprachqualität der Kniepunkt der Kompression abgesenkt, bzw. das Kompressionsverhältnis angehoben, bedeutet dies, dass für die der Kompression nachfolgende Anhebung der Verstärkung mehr Reserven zur Verfügung stehen, sodass leisere Signalanteile des Eingangs-Audiosignals besser hervorgehoben werden können. Umgekehrt kann bei einer Verbesserung der Sprachqualität der Kniepunkt angehoben werden, bzw. das Kompressionsverhältnis reduziert werden (also näher hin zu einer linearen Verstärkung eingestellt werden), sodass eine Kompression der Dynamik des Eingangs-Audiosignals erst bei höheren Pegeln bzw. in geringerem Umfang erfolgt, wodurch der natürliche Höreindruck besser erhalten bleiben kann.

Für Zeitkonstanten einer AGC gilt generell, dass zu kurze Einregelzeiten eher zu einem unnatürlichen Klangempfinden führen können, und daher bevorzugt vermieden werden. Bei einer vergleichsweise schwachen Sprachqualität können jedoch die Vorteile einer schnelleren Reaktionsfähigkeit der AGC durch die Verbesserung der Sprachverständlichkeit die potentiellen Nachteile des Klangempfindens überwiegen. Ähnliches gilt auch für die Richtwirkung von Richtsignalen: Im Allgemeinen kann durch ein stark gerichtetes Richtsignal das räumliche Hörempfinden beeinträchtigt werden, sodass Schallquellen ggf. nicht mehr korrekt durch den Höreindruck lokalisiert werden. Nicht zuletzt da dies z.B. im Straßenverkehr auch für die Sicherheit eines Benutzers einer Hörvorrichtung relevant werden kann, wird meist versucht, Richtsignale nur dann und in dem Maß einzusetzen, wenn und inwiefern die Verwendung absolut erforderlich erscheint (z.B. zur Hervorhebung eines Gesprächspartners). Liegt eine schwache Sprachqualität vor, kann jedoch die Richtwirkung auch weiter erhöht werden. Ebenso kann eine Rauschunterdrückung wie z.B. spektrale Subtraktion o.ä. bei festgestellter schwacher Sprachqualität erhöht werden, selbst wenn dies durch das SNR allein nicht erforderlich wäre. Methoden zur Rauschunterdrückung werden meist nur wenn notwendig eingesetzt, da z.B. hörbare Artefakte gebildet werden können.

Umgekehrt kann bei einer Verbesserung der Sprachqualität eine Zeitkonstante der AGC verlängert werden, bzw. die Richtwirkung verringert werden, da der natürliche Raumklang der Annahme gemäß zu bevorzugen ist, und eine zusätzliche Hervorhebung des Sprachsignals mittels Richtmikrofonie für die Sprachverständlichkeit nicht bzw. wenige erforderlich ist. Ebenso kann eine ungerichtete Rauschunterdrückung, z.B. mittels eines Wiener-Filters, in stärkerem Maß angewandt werden, da ggf. eine moderate Beeinträchtigung der Sprachqualität hierbei noch als hinnehmbar angesehen werden kann.

Als weiter vorteilhaft erweist es sich, wenn eine Mehrzahl an Frequenzbändern jeweils auf Signalanteile des Sprachsignals hin untersucht wird, und das Einstellen des wenigstens einen Parameters der Signalverarbeitung in Abhängigkeit des quantitativen Maßes für die Sprachqualität des Sprachsignals lediglich in denjenigen Frequenzbändern erfolgt, in welchen ein hinreichend hoher Signalanteil des Sprachsignals ermittelt wird. Dies bedeutet insbesondere, dass für diejenigen Frequenzbänder, in denen gar keine Signalanteile des Sprachsignal festgestellt werden, oder in denen die ermittelten Signalanteile des Sprachsignals unterhalb einer Relevanz-Schwelle liegen, die Parameter der Signalverarbeitung unabhängig von der ermittelten Sprachqualität eingestellt werden, und somit insbesondere nach den sonst üblichen Kriterien wie SNR etc. bewertet werden. Hierdurch kann sichergestellt werden, dass keine "Komodulation" in eigentlich unbeteiligten Frequenzbändern durch das Sprachsignal und dessen Sprachqualität erfolgt.

Erfindungsgemäß wird für das quantitative Maß für die Sprachqualität als artikulatorische Eigenschaft des Sprachsignals eine mit der Präzision von vorgegebenen Formanten von Vokalen in dem Sprachsignal korrelierte Kenngröße, und/oder eine mit der Dominanz von Konsonanten, insbesondere Frikativen und/oder Plosiven, in dem Sprachsignal korrelierte Kenngröße und/oder eine mit der Präzision von Übergängen von stimmhaften und stimmlosen Lauten korrelierte Kenngröße erfasst. Bevorzugt wird durch die Analyse des Eingangs-Audiosignals mittels der Signalverarbeitung weiter mindestens eine prosodische Eigenschaft des Sprachsignals quantitativ erfasst, und das quantitative Maß für die Sprachqualität des Sprachsignals (18) zusätzlich in Abhängigkeit der besagten prosodischen Eigenschaft abgeleitet. Besonders bevorzugt wird dabei als prosodische Eigenschaft des Sprachsignals eine mit einer Zeitstabilität einer Grundfrequenz des Sprachsignals korrelierte Kenngröße und/oder eine mit einer Schallintensität von Akzenten des Sprachsignals korrelierte Kenngröße erfasst.

Für die Erfassung der mit der Dominanz von Konsonanten in dem Sprachsignal korrelierte Kenngröße kann dabei z.B. eine in einem niedrigen Frequenzbereich beinhaltete erste Energie berechnet werden, eine in einem über dem niedrigen Frequenzbereich liegenden höheren Frequenzbereich beinhaltete zweite Energie berechnet werden, und die Kenngröße anhand eines Verhältnisses und/oder eines über die jeweiligen Bandbreiten der genannten Frequenzbereiche gewichteten Verhältnisses der ersten Energie und der zweiten Energie gebildet werden.

Für die Erfassung der mit der Präzision der Übergänge von stimmhaften und stimmlosen Lauten korrelierten Kenngröße kann z.B. anhand eine Korrelationsmessung und/oder anhand einer Nulldurchgangsrate eine Unterscheidung von stimmhaften Zeitsequenzen und stimmlosen Zeitsequenzen durchgeführt werden, ein Übergang von einer stimmhaften Zeitsequenz zu einer stimmlosen Zeitsequenz oder von einer stimmlosen Zeitsequenz zu einer stimmhaften Zeitsequenz ermittelt werden, für wenigstens einen Frequenzbereich die vor dem Übergang in der stimmhaften bzw. stimmlosen Zeitsequenz enthaltene Energie ermittelt werden, und für den wenigstens einen Frequenzbereich die nach dem Übergang in der stimmlosen bzw. stimmhaften Zeitsequenz enthaltene Energie ermittelt werden. Die Kenngröße wird dann anhand der Energie vor dem Übergang und anhand der Energie nach dem Übergang ermittelt wird.

Für die Erfassung der mit der Präzision von vorgegebenen Formanten von Vokalen in dem Sprachsignal korrelierten Kenngröße kann z.B. ein Signalanteil des Sprachsignals in wenigstens einem Formantenbereich im Frequenzraum ermittelt werden, für den Signalanteil des Sprachsignals im wenigstens einen Formantenbereich eine mit dem Pegel korrelierte Signalgröße ermittelt werden, und die Kenngröße anhand eines Maximalwertes und/oder anhand einer Zeitstabilität der mit dem Pegel korrelierten Signalgröße ermittelt werden.

Für eine Erfassung der mit der Schallintensität von Akzenten des Sprachsignals korrelierten Kenngröße kann z.B. für das Sprachsignal eine mit der Lautstärke korrelierte Größe wie z.B. ein Pegel o.ä. zeitaufgelöst erfasst werden, über einen vorgegebenen Zeitraum ein Quotient eines Maximalwertes der mit der Lautstärke korrelierten Größe zu einem über den vorgegebenen Zeitraum ermittelten Mittelwert der besagten Größe gebildet werden, und die Kenngröße in Abhängigkeit von besagtem Quotienten ermittelt werden, welcher aus dem Maximalwert und dem Mittelwert der mit der Lautstärke korrelierten Größe über den vorgegebenen Zeitraum gebildet wird.

Günstigerweise wird für das quantitative Maß für die Sprachqualität als eine artikulatorische Eigenschaft des Sprachsignals eine mit einer Artikulation von Konsonanten korrelierte Kenngröße erfasst, z.B. eine mit der Dominanz von Konsonanten, insbesondere von Friktiven und/oder Plosiven, im Sprachsignal korrelierte Kenngröße und/oder eine mit der Präzision von Übergängen von stimmhaften und stimmlosen Lauten korrelierte Kenngröße, und als der wenigstens eine Parameter ein Verstärkungsfaktor wenigstens eines für die Bildung von Konsonanten charakteristischen Frequenzbandes angehoben, wenn das quantitative Maß eine unzureichende Artikulation von Konsonanten indiziert. Dies bedeutet insbesondere: Im quantitativen Maß für die Sprachqualität wird eine Artikulation von Konsonanten bewertet. Wird dabei festgestellt, dass die Artikulation von Konsonanten vergleichsweise schwach ausgeprägt ist, z.B. durch einen Vergleich mit einem entsprechenden Grenzwert, so können um einen vorgegebenen Betrag oder abhängig von einer Abweichung vom Grenzwert diejenigen Frequenzbereiche angehoben werden, in welchen sich die akustische Energie von Konsonanten konzentriert (also z.B. 2 kHz bis 10 kHz, bevorzugt 3,5 kHz bis 8 kHz). Statt eines Vergleichs mit einem Grenzwert kann hierbei auch eine monotone Funktion des quantitativen Maßes für die Anhebung der betreffenden Frequenzbänder verwendet werden.

Vorteilhafterweise wird als das quantitative Maß ein binäres Maß abgeleitet, welches in Abhängigkeit der Sprachqualität einen ersten Wert oder einen zweiten Wert einnimmt, wobei der erste Wert einer hinreichend guten Sprachqualität des Sprachsignals zugeordnet ist, und der zweite Wert einer unzureichenden Sprachqualität des Sprachsignals zugeordnet ist, wobei für den ersten Wert der wenigstens eine Parameter der Signalverarbeitung auf einen ersten Parameterwert voreingestellt wird, welcher einem regulären Modus der Signalverarbeitung entspricht, und wobei für den zweiten Wert der wenigstens eine Parameter der Signalverarbeitung auf einen vom ersten Parameterwert verschiedenen zweiten Parameterwert eingestellt wird.

Dies bedeutet insbesondere: Das quantitative Maß erlaubt die Unterscheidung der Sprachqualität in zwei Werte, wobei der erste Wert (z.B. Wert 1) einer relativ besseren Sprachqualität entspricht, und der zweite Wert (z.B. Wert 0) einer schlechteren Sprachqualität. Bei hinreichend guter Sprachqualität (erster Wert) erfolgt die Signalverarbeitung gemäß einer Voreinstellung, wobei der erste Parameterwert bevorzugt identisch verwendet wird, wie bei einer Signalverarbeitung ohne jegliche Abhängigkeit von einer quantitativ erfassten Sprachqualität. Bevorzugt ist hierdurch für den wenigstens einen Parameter ein regulärer Modus der Signalverarbeitung definiert, also insbesondere eine Signalverarbeitung, wie sie stattfinden würde, wenn keine Sprachqualität als Kriterium erfasst würde.

Erfolgt nun eine "Verschlechterung" der Sprachqualität dahingehend, dass das quantitative Maß vom der besseren Sprachqualität zugeordneten ersten Wert aus den "schlechteren" zweiten Wert einnimmt, wird der zweite Parameterwert eingestellt, welcher bevorzugt derart gewählt wird, dass die Signalverarbeitung zur Verbesserung der Sprachqualität geeignet ist.

Vorzugsweise wird hierbei für einen Übergang des quantitativen Maßes vom ersten Wert zum zweiten Wert der wenigstens eine Parameter stetig vom ersten Parameterwert zum zweiten Parameterwert hin überblendet wird. Dadurch werden scharfe Übergänge im Ausgangs-Audiosignal vermieden, welche als unangenehm empfunden werden können.

In einer vorteilhaften Ausgestaltung wird als das quantitative Maß für die Sprachqualität ein diskretes Maß abgeleitet, welches in Abhängigkeit der Sprachqualität einen Wert aus einem Wertebereich von wenigstens drei diskreten Werten einnimmt, einzelne Werte des quantitativen Maßes monoton auf entsprechende, diskrete Parameterwerte für den wenigstens einen Parameter abgebildet werden. Ein diskreter Wertebereich mit mehr als nur zwei Werten für das quantitative Maß erlaubt eine Erfassung der Sprachqualität mit höherer Auflösung, und insofern die Möglichkeit, beim Ansteuern der Signalverarbeitung die Sprachqualität detaillierter zu berücksichtigen.

In einer weiter vorteilhaften, insbesondere alternativen Ausgestaltung wird als das quantitative Maß ein stetiges Maß abgeleitet, welches in Abhängigkeit der Sprachqualität einen Wert aus einem kontinuierlichen Wertebereich einnimmt, wobei einzelne Werte des quantitativen Maßes monoton auf entsprechende Parameterwerte aus einem kontinuierlichen Parameterintervall für den wenigstens einen Parameter abgebildet werden. Insbesondere ist unter einem stetigen Maß ein solches Maß umfasst, welches auf einem stetigen Algorithmus zur Berechnung basiert, wobei infinitesimale Diskretisierungen infolge der digitalen Erfassung des Eingangs-Audiosignals und der Berechnung vernachlässigt werden sollen (und insbesondere als stetig gelten sollen).

Für ein Maß, dessen Werte kontinuierlich sind, kann ein Einstellen des wenigstens einen Parameters in monotoner und insbesondere wenigstens stückweise stetiger Abhängigkeit vom quantitativen Maß durchgeführt werden. Nimmt z.B. das Maß m für die Sprachqualität Werte von 0 (schlecht) bis 1 (gut) ein, so kann als Parameter z.B. ein Verstärkungsfaktor G (frequenzabhängig oder breitbandig) in Abhängigkeit von $m \in [0,1]$ stetig monoton zwischen einem Maximalwert Gmax (für m=0) und einem Minimalwert Gmin (für m=1) variiert werden, welche das Parameterintervall [Gmin, Gmax] bilden. Insbesondere kann dabei auch ein Grenzwert $m_L$ für m vorgesehen sein kann, oberhalb dessen konstant der Verstärkungsfaktor Gmin eingenommen wird, also z.B. G (m) = Gmin für $m \geq m_L$. In diesem Fall ist eine "Verschlechterung" der Sprachqualität als ein Absinken des quantitativen Maßes m unter den Grenzwert $m_L$ anzusehen. Für ein quantitatives Maß mit einem diskreten Wertebereich von mehr als zwei Werten sowie für andere Steuergrößen als dem wenigstens einen einzustellenden Parameter gilt Vergleichbares mutatis mutandis.

Bevorzugt wird eine Sprachaktivität detektiert und/oder ein SNR im Eingangs-Audiosignal ermittelt, wobei das Einstellen des wenigstens einen Parameters der Signalverarbeitung zur Erzeugung des Ausgangs-Audiosignals anhand des Eingangs-Audiosignals in Abhängigkeit des quantitativen Maßes für die Sprachqualität des Sprachsignals zusätzlich in Abhängigkeit der detektierten Sprachaktivität bzw. des ermittelten SNR durchgeführt wird. Dies umfasst insbesondere, dass bereits die Analyse des Eingangs-Audiosignals hinsichtlich artikulatorischer und/oder prosodischer Eigenschaften eines Sprachsignals ausgesetzt werden kann, wenn keine Sprachaktivität im Eingangs-Audiosignal detektiert wird, und/oder wenn das SNR zu schlecht ist (also z.B. unter einem vorgegebenen Grenzwert liegt), und eine entsprechende Signalverarbeitung zur Rauschunterdrückung als prioritär erachtet wird.

Bevorzugt ist die Hörvorrichtung als ein Hörgerät ausgestaltet. Das Hörgerät kann dabei durch ein monaurales Gerät, oder durch ein binaurales Gerät mit zwei lokalen Geräten gegeben sein, welche vom Benutzer des Hörgerätes jeweils an seinem rechten bzw. linken Ohr zu tragen sind. Insbesondere kann das Hörgerät zusätzlich zum genannten Eingangswandler auch noch mindestens einen weiteren akusto-elektrischen Eingangswandler aufweisen, welcher den Schall der Umgebung in ein entsprechendes weiteres Eingangs-Audiosignal umwandelt, sodass die quantitative Erfassung der mindestens einen artikulatorischen und/oder prosodischen Eigenschaft eines Sprachsignals durch eine Analyse einer Mehrzahl von beteiligten Eingangs-Audiosignalen erfolgen kann. Im Fall eines binauralen Gerätes können zwei der verwendeten Eingangs-Audiosignale jeweils in unterschiedlichen lokalen Einheiten des Hörgeräts (also jeweils am linken bzw. am rechten Ohr) erzeugt werden. Die Signalverarbeitungseinrichtung kann hierbei insbesondere Signalprozessoren beider lokaler Einheiten umfassen, wobei bevorzugt jeweils lokal erzeugte Maße für die Sprachqualität je nach betrachteter artikulatorischer und/oder prosodischer Eigenschaft in geeigneter Weise durch Mittelwertbildung oder einen Maximal- oder Minimalwert für beide lokalen Einheiten vereinheitlicht werden. Insbesondere kann für ein binaurales Hörgerät der wenigstens eine Parameter der Signalverarbeitung einen binauralen Betrieb betreffen, also z.B. eine Direktionalität eines Richtsignals angesteuert werden.

Nachfolgend wird ein Ausführungsbeispiel der Erfindung anhand einer Zeichnung näher erläutert. Hierbei zeigen jeweils schematisch:

Fig. 1     in einem Schaltbild ein Hörgerät, welches einen Schall mit einem Sprachsignal erfasst, und

Fig. 2     in einem Blockschaltbild ein Verfahren zum Ermitteln eines quantitativen Maßes für die Sprachqualität des Sprachsignals nach Fig. 1,

Fig. 3     in einem Blockschaltbild ein Verfahren zum Einstellen der Signalverarbeitung des Hörgerätes nach Fig.1 in Abhängigkeit einer ermittelten Sprachqualität, und

Fig. 4     in einem Diagramm eine Funktion für eine Steuergröße der Signalverarbeitung nach Fig. 3 in Abhängigkeit des quantitativen Maßes für die Sprachqualität nach Fig. 2.

Einander entsprechende Teile und Größen sind in allen Figuren jeweils mit denselben Bezugszeichen versehen.

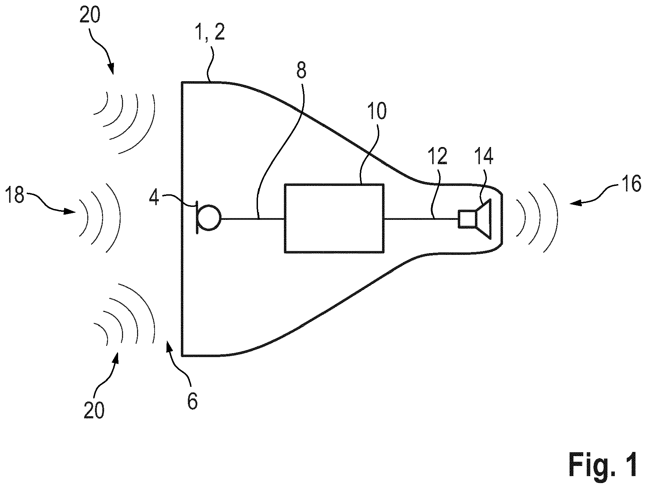

In Figur 1 ist schematisch in einem Schaltbild eine Hörvorrichtung 1 dargestellt, welche vorliegend als ein Hörgerät 2 ausgestaltet ist. Das Hörgerät 2 weist einen akusto-elektrischen Eingangswandler 4 auf, welcher dazu eingerichtet ist, einen Schall 6 der Umgebung des Hörgerätes 2 in ein Eingangs-Audiosignal 8 umzuwandeln. Eine Ausgestaltung des Hörgerätes 2 mit einem weiteren Eingangswandler (nicht dargestellt), welcher ein entsprechendes weiteres Eingangs-Audiosignal aus dem Schall 6 der Umgebung erzeugt, ist hierbei ebenso denkbar. Das Hörgerät 2 ist vorliegend als ein alleinstehendes, monaurales Gerät ausgebildet. Ebenso denkbar ist eine Ausgestaltung des Hörgerätes 2 als ein binaurales Hörgerät mit zwei lokalen Geräten (nicht dargestellt), welche vom Benutzer des Hörgerätes 2 jeweils an seinem rechten bzw. linken Ohr zu tragen sind.

Das Eingangs-Audiosignal 8 wird einer Signalverarbeitungseinrichtung 10 des Hörgerätes 2 zugeführt, in welcher das Eingangs-Audiosignal 8 insbesondere gemäß den audiologischen Anforderungen des Benutzers des Hörgerätes 2 entsprechend verarbeitet und dabei zum Beispiel frequenzbandweise verstärkt und/oder komprimiert wird. Die Signalverarbeitungseinrichtung 10 ist hierfür insbesondere mittels eines entsprechenden Signalprozessors (in Figur 1 nicht näher dargestellt) und eines über den Signalprozessor adressierbaren Arbeitsspeichers eingerichtet. Eine etwaige Vorverarbeitung des Eingangs-Audiosignals 8, wie z.B. eine A/D-Wandlung und/oder Vorverstärkung des erzeugten Eingangs-Audiosignals 8, soll hierbei als Teil des Eingangswandlers 4 betrachtet werden.

Die Signalverarbeitungseinrichtung 10 erzeugt hierbei durch die Verarbeitung des Eingangs-Audiosignals 8 ein Ausgangs-Audiosignal 12, welches mittels eines Elektro-akustischen Ausgangswandlers 14 in eine Ausgangsschallsignal 16 des Hörgerätes 2 umgewandelt wird. Der Eingangswandler 4 ist hierbei vorzugsweise gegeben durch ein Mikrofon, der Ausgangswandler 14 beispielsweise durch einen Lautsprecher (wie etwa einen Balanced Metal Case Receiver), kann aber auch durch einen Knochenleithörer o.ä. gegeben sein.

Der Schall 6 der Umgebung des Hörgerätes 2, welcher vom Eingangswandler 4 erfasst wird, beinhaltet unter anderem ein Sprachsignal 18 eines nicht näher dargestellten Sprechers, sowie weitere Schallanteile 20, welche insbesondere durch gerichtete und/oder diffuse Störgeräusche (Störschall bzw. Hintergrundrauschen) umfassen können, aber auch solche Geräusche beinhalten können, welche je nach Situation als ein Nutzsignal angesehen werden könnten, also beispielsweise Musik oder die Umgebung betreffende, akustische Warn- oder Hinweis-Signale.

Die in der Signalverarbeitungseinrichtung 10 zur Erzeugung des Ausgangs-Audiosignals 12 erfolgende Signalverarbeitung des Eingangs-Audiosignals 8 kann insbesondere eine Unterdrückung der Signalanteile umfassen, welche die im Schall 6 enthaltenen Störgeräusche unterdrücken, bzw. eine relative Anhebung der das Sprachsignal 18 repräsentierenden Signalanteile gegenüber den die weiteren Schallanteile 20 repräsentierenden Signalanteil. Insbesondere können hierbei auch eine frequenzabhängige oder breitbandige Dynamik-Kompression und/oder Verstärkung sowie Algorithmen zur Rauschunterdrückung angewandt werden.

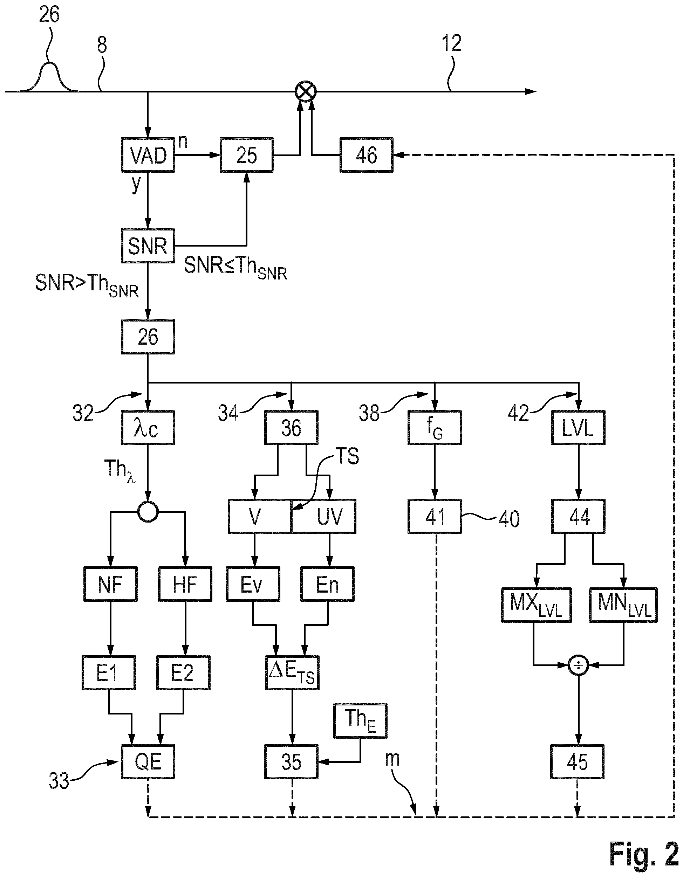

Um die Signalanteile im Eingangs-Audiosignal 8, welche das Sprachsignal 18 repräsentieren, im Ausgangs-Audiosignal 12 möglichst gut hörbar zu machen, und dem Benutzer des Hörgerätes 2 im Ausgangsschall 16 dennoch einen möglichst natürlichen Höreindruck vermitteln zu können, soll in der Signalverarbeitungseinrichtung 10 zur Steuerung der auf das Eingangs-Audiosignal 8 anzuwendenden Algorithmen ein quantitatives Maß für die Sprachqualität des Sprachsignals 18 ermittelt werden. Dies ist anhand von Figur 2 beschrieben.

Figur 2 zeigt in einem Blockschaltbild eine Verarbeitung des Eingangs-Audiosignals 8 des Hörgerätes 2 nach Figur 2. Zunächst wird für das Eingangs-Audiosignal 8 eine Erkennung einer Sprachaktivität VAD durchgeführt. Liegt keine nennenswerte Sprachaktivität vor (Pfad "n"), so erfolgt die Signalverarbeitung des Eingangs-Audiosignals 8 zur Erzeugung des Ausgangs-Audiosignals 12 anhand eines ersten Algorithmus 25. Der erste Algorithmus 25 bewertet dabei in einer vorab vorgegebenen Weise Signalparameter des Eingangs-Audiosignals 8 wie z.B. Pegel, Rauschhintergrund, Transienten o.ä., breitbandig und/oder insbesondere frequenzbandweise, und ermittelt hieraus einzelne Parameter, z.B. frequenzbandweise Verstärkungsfaktoren und/oder Kompressions-Kenndaten (also v.a. Kniepunkt, Verhältnis, Attack, Release), welche auf das Eingangs-Audiosignal 8 anzuwenden sind.

Insbesondere kann der erste Algorithmus 25 auch eine Klassifizierung einer Hörsituation vorsehen, welche im Schall 6 realisiert ist, und in Abhängigkeit der Klassifizierung einzelne Parameter einstellen, ggf. als entsprechend für eine konkrete Hörsituation vorgesehenes Hörprogramm. Überdies können für den ersten Algorithmus 25 auch die individuellen audiologischen Anforderungen des Benutzers des Hörgerätes 2 berücksichtigt werden, um durch die Anwendung des ersten Algorithmus 25 auf das Eingangs-Audiosignal 8 eine Hörschwäche des Benutzers möglichst gut kompensieren zu können.

Wird jedoch bei der Erkennung einer Sprachaktivität VAD eine nennenswerte Sprachaktivität festgestellt (Pfad "y" der), so wird als nächstes ein SNR ermittelt, und mit einem vorgegebenen Grenzwert $Th_{SNR}$ verglichen. Liegt das SNR nicht oberhalb des Grenzwertes, also $SNR \leq Th_{SNR}$, so wird auf das Eingangs-Audiosignal 8 zur Erzeugung des Ausgangs-Audiosignals 12 erneut der erste Algorithmus 25 angewandt. Liegt jedoch das SNR oberhalb des vorgegebenen Grenzwertes $Th_{SNR}$, also $SNR > Th_{SNR}$, so wird für die weitere Verarbeitung des Eingangs-Audiosignals 8 in nachfolgend beschriebener Weise ein quantitatives Maß m für die Sprachqualität des im Eingangs-Audiosignal 8 enthaltenen Sprachanteils 18 ermittelt. Hierfür werden artikulatorische und/oder prosodische Eigenschaften des Sprachsignals 18 quantitativ erfasst. Unter dem Begriff des im Eingangs-Audiosignal 8 enthaltenen Sprachsignalanteils 26 sind hierbei diejenigen Signalanteile des Eingangs-Audiosignals 8 zu verstehen, welche den Sprachanteil 18 des Schalls 6 repräsentieren, aus dem das Eingangs-Audiosignal 8 mittels des Eingangswandlers 4 erzeugt wird.

Zum Ermitteln des besagten quantitativen Maßes m wird das Eingangs-Audiosignal 8 in einzelne Signalpfade aufgeteilt.

Für einen ersten Signalpfad 32 des Eingangs-Audiosignals 8 wird zunächst eine Schwerpunktwellenlänge $\lambda_C$ ermittelt, und mit einem vorgegebenen Grenzwert für die Schwerpunktwellenlänge $Th_\lambda$ verglichen. Wird anhand des besagten Grenzwertes für die Schwerpunktwellenlänge $Th_\lambda$ festgestellt, dass die Signalanteile im Eingangs-Audiosignal 8 hinreichend hochfrequent sind, so werden im ersten Signalpfad 32, ggf. nach einer geeignet zu wählenden zeitlichen Glättung (nicht dargestellt), für einen niedrigen Frequenzbereich NF und einen über dem niedrigen Frequenzbereich NF liegenden, höheren Frequenzbereich HF die Signalanteile ausgewählt. Eine mögliche Aufteilung kann beispielsweise derart sein, dass der niedrige Frequenzbereich NF alle Frequenzen $f_N \leq 2500\,Hz$, insbesondere $f_N \leq 2000\,Hz$ umfasst, und der höhere Frequenzbereich HF Frequenzen $f_H$ mit $2500\,Hz < f_H \leq 10000\,Hz$, insbesondere $4000\,Hz \leq f_H \leq 8000\,Hz$ oder $2500\,Hz < f_H \leq 5000\,Hz$ umfasst.

Die Auswahl kann unmittelbar im Eingangs-Audiosignal 8 durchgeführt werden, oder auch derart erfolgen, dass das Eingangs-Audiosignal 8 mittels einer Filterbank (nicht dargestellt) in einzelne Frequenzbänder aufgeteilt wird, wobei einzelne Frequenzbänder in Abhängigkeit der jeweiligen Bandgrenzen dem niedrigen oder höheren Frequenzbereich NF bzw. HF zugeordnet werden.

Anschließend werden für das im niedrigen Frequenzbereich NF enthaltene Signal eine erste Energie E1 und für das im höheren Frequenzbereich HF enthaltene Signal eine zweite Energie E2 ermittelt. Es wird nun ein Quotient QE aus der zweiten Energie als Zähler und der ersten Energie E1 als Nenner gebildet. Der Quotient QE kann nun bei geeignet gewähltem niederen und höheren Frequenzbereich NF, HF als eine Kenngröße 33 herangezogen werden, welche mit Dominanz von Konsonanten im Sprachsignal 18 korreliert ist. Die Kenngröße 33 ermöglicht somit eine Aussage über eine artikulatorische Eigenschaft der Sprachsignalanteile 26 im Eingangs-Audiosignal 8. So kann z.B. für einen Wert des Quotienten QE ≫ 1 (also QE > $Th_{QE}$ mit einem vorgegebenen, nicht näherdargestellten Grenzwert $Th_{QE}$ ≫ 1) eine hohe Dominanz für Konsonanten gefolgert werden, während für einen Wert QE < 1 eine geringe Dominanz gefolgert werden kann.

In einem zweiten Signalpfad 34 wird im Eingangs-Audiosignal 8 anhand von Korrelationsmessungen und/oder anhand einer Nulldurchgangsrate des Eingangs-Audiosignals 8 eine Unterscheidung 36 in stimmhafte Zeitsequenzen V und stimmlose Zeitsequenzen UV durchgeführt. Anhand der stimmhaften und stimmlosen Zeitsequenzen V bzw. UV wird ein Übergang TS von einer stimmhaften Zeitsequenz V zu einer stimmlosen Zeitsequenz UV ermittelt. Die Länge einer stimmhaften oder stimmlosen Zeitsequenz kann z.B. zwischen 10 und 80 ms, insbesondere zwischen 20 und 50 ms betragen.

Es wird nun für wenigstens einen Frequenzbereich (z.B. eine als geeignet ermittelte Auswahl an besonders aussagekräftigen Frequenzbändern, z.B. die Frequenzbänder 16 bis 23 der Bark-Skala, oder die Frequenzbänder 1 bis 15 der Bark-Skala) jeweils ein Energie Ev für die stimmhafte Zeitsequenz V vor dem Übergang TS und eine Energie En für die stimmlose Zeitsequenz UV nach dem Übergang TS ermittelt. Insbesondere können hierbei auch für mehr als einen Frequenzbereich jeweils getrennt entsprechende Energien vor und nach dem Übergang TS ermittelt werden. Es wird nun bestimmt, wie sich die Energie am Übergang TS verändert, z.B. durch eine relative Änderung $\Delta E_{TS}$ oder durch einen Quotienten (nicht dargestellt) der Energien Ev, En vor und nach dem Übergang TS.

Das Maß für die Änderung der Energie, also vorliegend die relative Änderung wird nun mit einem vorab für eine gute Artikulation ermittelten Grenzwert $Th_E$ für Energieverteilung an Übergängen verglichen. Insbesondere kann eine Kenngröße 35 anhand eines Verhältnisses aus der relative Änderung $\Delta E_{TS}$ und dem besagten Grenzwert $Th_E$ oder anhand einer relativen Abweichung der relative Änderung $\Delta E_{TS}$ vom diesem Grenzwert $Th_E$ gebildet werden. Besagte Kenngröße 35 ist mit der Artikulation der Übergänge von stimmhaften und stimmlosen Lauten im Sprachsignal 18 korreliert ist, und ermöglicht somit einen Aufschluss über eine weitere artikulatorische Eigenschaft der Sprachsignalanteile 26 im Eingangs-Audiosignal 8. Generell gilt hierbei die Aussage, dass eine Übergang zwischen stimmhaften und stimmlosen Zeitsequenzen umso präziser artikuliert ist, je schneller, also zeitlich abgrenzbarer ein Wechsel der Energieverteilung über die für stimmhafte und stimmlose Laute relevanten Frequenzbereiche erfolgt.

Für die Kenngröße 35 kann jedoch auch eine Energieverteilung in zwei Frequenzbereichen (z.B. die oben genannten Frequenzbereichen gemäß der Bark-Skala, oder auch im niederen und höheren Frequenzbereich NF, HF) betrachtet werden, z.B. über einen Quotienten der jeweiligen Energien oder einen vergleichbaren Kennwert, und eine Veränderung des Quotienten bzw. des Kennwertes über den Übergang hinweg für die Kenngröße herangezogen werden. So kann z.B. eine Änderungsrate des Quotienten bzw. der Kenngröße bestimmt und mit einem vorab als geeignet ermittelten Referenzwert für die Änderungsrate verglichen werden.

Zur Bildung der Kenngröße 35 können auch Übergänge von stimmlosen Zeitsequenzen in analoger Weise betrachtet werden. Die konkrete Ausgestaltung, insbesondere hinsichtlich der zu verwendenden Frequenzbereiche und Grenz- bzw. Referenzwerte kann generell anhand empirischer Ergebnisse über eine entsprechende Aussagekraft der jeweiligen Frequenzbänder bzw. der Gruppen von Frequenzbändern erfolgen.

In einem dritten Signalpfad 38 wird im Eingangs-Audiosignal 8 zeitaufgelöst eine Grundfrequenz $f_G$ des Sprachsignalanteils 26 erfasst, und für besagte Grundfrequenz $f_G$ eine Zeitstabilität 40 anhand einer Varianz der Grundfrequenz $f_G$ ermittelt. Die Zeitstabilität 40 kann als eine Kenngröße 41 verwendet werden, welche eine Aussage über eine prosodische Eigenschaft der Sprachsignalanteile 26 im Eingangs-Audiosignal 8 ermöglicht. Eine stärkere Varianz in der Grundfrequenz $f_G$ kann dabei als ein Indikator für eine bessere Sprachverständlichkeit herangezogen werden, während eine monotone Grundfrequenz $f_G$ eine geringere Sprachverständlichkeit aufweist.

In einem vierten Signalpfad 42 wird für das Eingangs-Audiosignal 8 und/oder für den darin enthaltenen Sprachsignalanteil 26 zeitaufgelöst ein Pegel LVL erfasst, und über einen insbesondere anhand entsprechender empirischer Erkenntnisse vorgegebenen Zeitraum 44 ein zeitlicher Mittelwert $MN_{LVL}$ gebildet. Des Weiteren wird über den Zeitraum 44 das Maximum $MX_{LVL}$ des Pegels LVL ermittelt. Das Maximum $MX_{LVL}$ des Pegels LVL wird nun durch den zeitlichen Mittelwert $MN_{LVL}$ des Pegels LVL dividiert, und so eine mit einer Lautstärke des Sprachsignals 18 korrelierte Kenngröße 45 ermittelt, welche eine weitere Aussage über eine prosodische Eigenschaft der Sprachsignalanteile 26 im Eingangs-Audiosignal 8 ermöglicht. Anstatt des Pegels LVL kann hierbei auch eine andere mit der Lautstärke und/oder dem Energieinhalt des Sprachsignalanteils 26 korrelierte Größe verwendet werden.

Die jeweils im ersten bis vierten Signalpfad 32, 34, 38, 42 wie beschrieben ermittelten Kenngrößen 33, 35, 41 bzw. 45 können nun jeweils einzeln als das quantitative Maß m für die Qualität des im Eingangs-Audiosignal 8 enthaltenen Sprachanteils 18 herangezogen werden, in dessen Abhängigkeit das Eingangs-Audiosignal nun ein zweiter Algorithmus 46 auf das Eingangs-Audiosignal 8 zur Signalverarbeitung angewandt wird. Der zweite Algorithmus 46 kann hierbei aus dem ersten Algorithmus 25 durch eine in Abhängigkeit des betreffenden quantitativen Maßes m erfolgende, entsprechende Veränderung eines oder mehrerer Parameter der Signalverarbeitung hervorgehen, oder ein gänzlich eigenständiges Hörprogramm vorsehen.

Insbesondere kann als quantitatives Maß m für die Sprachqualität auch ein einzelner Wert anhand der wie beschrieben ermittelten Kenngrößen 33, 35, 41 bzw. 45 bestimmt werden, z.B. durch einen gewichteten Mittelwert oder ein Produkt der Kenngrößen 33, 35, 41, 45 (in Fig. 2 schematisch durch das Zusammenführen der Kenngrößen 33, 35, 41, 45 dargestellt). Die Gewichtung der einzelnen Kenngrö-βen kann hierbei insbesondere anhand von vorab empirisch ermittelten Gewichtungsfaktoren erfolgen, welche anhand einer Aussagekraft der durch die jeweilige Kenngröße erfasste artikulatorische bzw. prosodische Eigenschaft für die Sprachqualität bestimmt werden können.

Soll das quantitative Maß m zudem die Präzision von vorgegebenen Formanten von Vokalen in dem Sprachsignal 18 erfassen, kann ein Signalanteil des Sprachsignals 18 in wenigstens einem Formantenbereich im Frequenzraum ermittelt und für den Signalanteil des Sprachsignals 18 im betreffenden Formantenbereich ein Pegel oder eine mit dem Pegel korrelierte Signalgröße ermittelt werden (nicht dargestellt). Anhand eines Maximalwertes und/oder anhand einer Zeitstabilität des Pegels bzw. der mit dem Pegel korrelierten Signalgröße wird dann eine entsprechende Kenngröße bestimmt, welche mit der Präzision von Formanten korreliert ist. Insbesondere kann hierbei als der wenigstens Formantenbereich der Frequenzbereich der ersten Formanten F1 (bevorzugt 250 Hz bis 1 kHz, besonders bevorzugt 300 Hz bis 750 Hz) oder der zweiten Formanten F2 (bevorzugt 500 Hz bis 3,5 kHz, besonders bevorzugt 600 Hz bis 2,5 kHz) gewählt werden, oder es werden zwei Formantenbereiche der ersten und zweiten Formanten gewählt. Insbesondere können auch mehrere, unterschiedliche Vokalen zugeordnete erste und/oder zweite Formantenbereiche (also die Frequenzbereiche, welche dem ersten bzw. zweiten Formanten des jeweiligen Vokals zugeordnet sind) gewählt werden. Für den oder die gewählten Formantenbereiche wird nun der Signalanteil ermittelt, und eine mit dem Pegel korrelierte Signalgröße des jeweiligen Signalanteils bestimmt. Die Signalgröße kann dabei durch den Pegel selbst, oder auch durch die ggf. geeignet geglättete maximale Signalamplitude gegeben sein. Anhand einer Zeitstabilität der Signalgröße, welche sich wiederum durch eine Varianz der Signalgröße über ein geeignetes Zeitfenster ermitteln lässt, und/oder anhand einer Abweichung der Signalgröße von ihrem Maximalwert über ein geeignetes Zeitfenster lässt sich nun eine Aussage über die Präzision von Formanten dahingehend treffen, dass eine geringe Varianz und geringe Abweichung vom Maximalpegel für einen artikulierten Laut (die Länge des Zeitfensters kann insbesondere abhängig von der Länge eines artikulierten Lautes gewählt werden) für eine hohe Präzision sprechen.

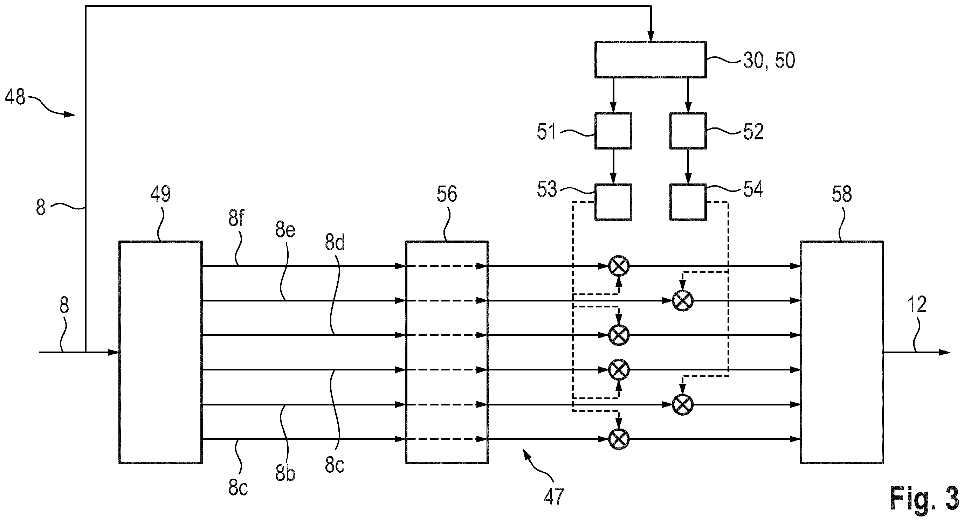

In Fig. 3 ist in einem Blockschaltbild ein Einstellen der Signalverarbeitung des Eingangs-Audiosignals 8 nach Fig. 1 in Abhängigkeit der Sprachqualität gezeigt, wie sie im anhand von Fig. 2 gezeigten Verfahren quantitativ erfasst wird. Vom Eingangs-Audiosignal 8 wird hierbei einerseits in einen Hauptsignalpfad 47 und einen Nebensignalpfad 48 aufgeteilt. Im Hauptsignalpfad 47 findet in noch zu beschreibender Weise die eigentliche Verarbeitung der Signalanteil des Eingangs-Audiosignals 8 derart statt, dass aus diesen verarbeiteten Signalanteilen später das Ausgangs-Audiosignal 12 gebildet wird. Im Nebensignalpfad werden in noch zu beschreibender Weise Steuergrößen für die besagte Verarbeitung der Signalanteile im Hauptsignalpfad 47 gewonnen. Dabei wird im Nebensignalpfad 48 ein quantitatives Maß m für die Sprachqualität des im Eingangs-Audiosignal 8 enthaltenen Signalanteils eines Sprachsignals ermittelt, so wie anhand von Fig. 2 beschreiben.

Das Eingangs-Audiosignal 8 wird zudem an einer Filterbank 49 in einzelne Frequenzbänder 8a-8f aufgeteilt (die Unterteilung kann dabei eine deutlich größere Anzahl als die lediglich schematisch dargestellten sechs Frequenzbänder 8a-8f umfassen). Die Filterbank 49 ist hierbei als ein separates Schaltelement dargestellt, es kann jedoch auch auf dieselbe Filterbankstruktur zugegriffen werden, welche im Rahmen der Ermittlung des quantitativen Maßes m im Nebensignalpfad 48 verwendet wird, bzw. kann eine Signalaufteilung zur Ermittlung des quantitativen Maßes m einmalig erfolgen, sodass einzelne Signalanteile in den erzeugten Frequenzbändern einerseits im Nebensignalpfad 48 zur Ermittlung des quantitativen Maßes m für die Sprachqualität herangezogen werden, und andererseits im Hauptsignalpfad 47 entsprechend für eine Erzeugung des Ausgangs-Audiosignals 12 weiterverarbeitet werden.

Das ermittelte quantitative Maß m kann hierbei einerseits z.B. eine Einzelgröße darstellen, welche lediglich eine konkrete artikulatorische Eigenschaft des Sprachsignals 18 nach Fig. 1, wie etwa eine Dominanz von Konsonanten oder eine Präzision von Übergängen zwischen stimmhaften und stimmlosen Zeitsequenzen oder eine Präzision von Formanten bewertet, oder eine konkrete prosodische Eigenschaft wie z.B. eine Zeitstabilität der Grundfrequenz $f_G$ des Sprachsignals 18 oder eine Akzentuierung des Sprachsignals 18 über eine entsprechende Variation des Maximalpegels bzgl. einem zeitlichen Mittelwert des Pegels bewertet. Andererseits kann das quantitative Maß m auch als ein gewichteter Mittelwert aus mehreren Kenngrößen gebildet werden, welche jeweils eine der genannten Eigenschaften bewerten, wie z.B. ein gewichteter Mittelwert aus den Kenngrößen 33, 35, 41, 45 nach Fig. 2.

Das quantitative Maß m soll vorliegend als ein binäres Maß 50 derart ausgestaltet sein, dass es einen ersten Wert 51 oder einen zweiten Wert 52 einnimmt. Der erste Wert 51 indiziert hierbei eine hinreichend gute Sprachqualität, während der zweite Wert 52 eine unzureichende Sprachqualität indiziert. Dies kann insbesondere dadurch erreicht werden, dass ein an sich kontinuierlicher Wertebereich einer Kenngröße wie der Kenngrößen 31, 33, 41 bzw.45, welche gemäß Fig. 2 für das Ermitteln des quantitativen Maßes m für die Sprachqualität bestimmt werden, bzw. eines entsprechenden gewichteten Mittelwertes mehrerer solcher Kenngrö-ßen, in zwei Bereiche unterteilt wird, und einem Bereich der erste Wert 51 zugewiesen wird, während dem anderen Bereich der zweite Wert 52 zugewiesen wird. Dabei sind bevorzugt für die Zuweisung zum ersten bzw. zweiten Wert 51, 52 die einzelnen Bereiche des Wertebereichs für die Kenngröße bzw. den Mittelwert an Kenngrößen so zu wählen, dass eine Zuweisung zum ersten Wert 51 tatsächlich einer ausreichend hohen Sprachqualität entspricht, sodass keinerlei weitere Verarbeitung des Eingangs-Audiosignals 8 mehr erforderlich ist, um eine ausreichende Verständlichkeit der entsprechenden Sprachsignalanteile im aus dem Ausgangs-Audiosignal 12 erzeugten Ausgangsschall 16 zu gewährleisten.

Der erste Wert 51 des quantitativen Maßes wird hierbei einem ersten Parameterwert 53 für die Signalverarbeitung zugeordnet, welcher insbesondere durch den jeweils im ersten Algorithmus 25 nach Fig. 2 verwirklichten Wert gegeben sein kann. Dies bedeutet: Der erste Parameterwert 53 ist insbesondere gegeben durch einen konkreten Wert wenigstens eines Parameters der Signalverarbeitung, also z.B. (vorliegend jeweils für ein betreffendes Frequenzband) durch einen Verstärkungsfaktor, einen Kompressions-Kniepunkt, ein Kompressionsverhältnis, eine Zeitkonstante einer AGC, oder einen Richtparameter eines Richtsignals. Insbesondere kann der erste Parameterwert durch einen Vektor von Werten für mehrere der genannten Signalsteuergrößen gegeben sein. Der konkrete Zahlwert des ersten Parameterwertes 53 entspricht hierbei dem Wert, welchen der Parameter im ersten Algorithmus 25 einnimmt.

Der zweite Wert 52 wird einem zweiten Parameterwert 54 für die Signalverarbeitung zugeordnet, welcher insbesondere durch den jeweils im zweiten Algorithmus 46 nach Fig. 2 verwirklichten Wert für den Verstärkungsfaktor, den Kompressions-Kniepunkt, das Kompressionsverhältnis, die Zeitkonstante der AGC, bzw. den Richtparameter gegeben sein kann.

Die Signalanteile in den einzelnen Frequenzbändern 8a-8f werden nun einer Analyse 56 dahingehend unterzogen, ob im jeweiligen Frequenzband 8a-8f Signalanteile eines Sprachsignals vorliegen. Ist dies nicht der Fall (im vorliegenden Beispiel für die Frequenzbänder 8a, 8c, 8d, 8f), so wird auf das Eingangs-Audiosignal 8 zur Signalverarbeitung der erste Parameterwert 53 angewandt (z.B. als Vektor von Verstärkungsfaktoren für die betroffenen Frequenzbänder 8a, 8c, 8d, 8f). Diese Frequenzbänder 8a, 8c, 8d, 8f werden einer Signalverarbeitung unterzogen, welche keine zusätzliche Verbesserung der Sprachqualität erfordert, etwa, weil kein Sprachsignalanteil vorhanden ist, oder, da die Sprachqualität bereits hinreichend gut ist.

Ist dies jedoch nicht der Fall, und nimmt das quantitative Maß m den zweiten Wert 52 ein, so wird auf diejenigen Frequenzbänder 8b und 8e, in welchen ein Sprachanteil festgestellt wurde, der zweite Parameterwert 54 für die Signalverarbeitung angewandt (welcher einer Signalverarbeitung gemäß dem zweiten Algorithmus 46 nach Fig. 2 entspricht). Insbesondere kann hierbei im Fall, dass das quantitative Maß m anhand einer Kenngröße ermittelt wurde, welche eine Aussage über die Artikulation von Konsonanten erlaubt (z.B. die Kenngrößen 31 und 35 nach Fig. 2, welche von der Dominanz von Konsonanten bzw. der Präzision von Übergängen zwischen stimmhaften und stimmlosen Zeitsequenzen abhängen), der zweite Parameterwert 54 für das höher gelegene Frequenzband 8e eine zusätzliche Anhebung der Verstärkung vorsehen, wenn in diesem Frequenzband 8e eine besondere Konzentration von akustischer Energie für eine Artikulation von Konsonanten vorliegt.

Abschließend werden die Signalteile der einzelnen Frequenzbänder 8a-8f, nach der wie beschrieben erfolgten Signalverarbeitung der jeweiligen Signalanteile mit dem ersten Parameterwert 53 (für die Frequenzbänder 8a, 8c, 8d, 8f) bzw. dem zweiten Parameterwert 54 (für die Frequenzbänder 8b, 8e), in einer Synthesefilterbank 58 zusammengeführt, wobei das Ausgangs-Audiosignal 12 erzeugt wird.

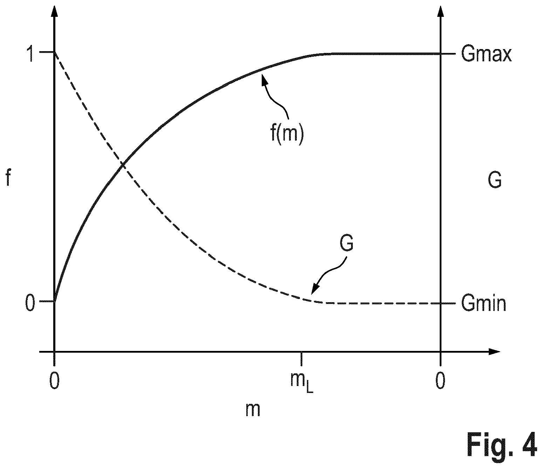

In Fig. 4 ist in einem Diagramm eine Funktion f für einen Parameter G zur Steuerung einer Signalverarbeitung in Abhängigkeit eines quantitativen Maßes m eines Sprachqualität eines Sprachsignals dargestellt. Der Parameter G ist nicht auf eine Verstärkung beschränkt, sondern kann dabei durch eine der o.g. Steuergrößen gegeben sein, oder bei einem vektorwertigen Parameter einen Eintrag des Vektors betreffen. Das quantitative Maß m hat für das Beispiel nach Fig. 4 einen kontinuierlichen Wertebereich zwischen 0 und 1, wobei der Wert 1 eine maximal gute Sprachqualität indiziert, und der Wert 0 eine maximal schlechte Sprachqualität. Insbesondere kann hierbei eine für das Ermitteln des quantitativen Maßes m verwendete Kenngröße geeignet normiert werden, um den Wertebereich für das quantitative Maß auf das Intervall [0, 1] zu begrenzen.

Die Funktion f (durchgezogene Linie, linke Skala) wird hierbei erzeugt, um anschließend den Parameter G (gestrichelte Linie, rechte Skala) mittels der Funktion f zwischen einem maximalen Parameterwert Gmax und einem minimalen Parameterwert Gmin stetig interpolieren zu können. Dem Wert 1 für das quantitative Maß m wird nun der Funktionswert f(1) = 1 zugeordnet, dem Wert 0 der Funktionswert f(0) = 0. Der Parameter g sei dabei derart, dass für gute Sprachqualität (also m = 1) der Parameterwert Gmin für die Signalverarbeitung angewandt wird, und für eine schlechte Signalqualität (also m = 0) der Parameterwert Gmax. Für Werte von m oberhalb eines Grenzwerte $m_L$ wird die Sprachqualität immer noch als "hinreichend gut" angesehen, sodass keine Abweichung der Parameters G vom entsprechenden minimalen Parameterwert Gmin für "gute Sprachqualität" als erforderlich angesehen wird; die Funktion f (m) für $m \geq m_L$ ist also f (m) = 1, und entsprechend G = Gmin. Unterhalb des Grenzwertes $m_L$ wird das quantitative Maß m für die Sprachqualität stetig monoton steigend auf f (m) abgebildet (vorliegend mit einer nahezu exponentiellen Kurve), sodass für den Wert m = 0 bzw. m = $m_L$ die Funktion wie gefordert die Werte f (0) = 0 bzw. f($m_L$) = 1 einnimmt. Für den zugehörigen Parameter G bedeutet dies, dass für m > 0 G von Gmax zunehmend steil auf Gmin (bei m = $m_L$) abnimmt. Der Zusammenhang zwischen der Funktion f und dem Parameter G lässt sich beispielsweise als

$$G(m) = Gmax - f(m) \cdot (Gmin - Gmax)$$

darstellen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 1 | Hörvorrichtung |
| 2 | Hörgerät |
| 4 | Eingangswandler |
| 6 | Schall der Umgebung |
| 8 | Eingangs-Audiosignal |
| 8a-f | Frequenzbänder |
| 10 | Signalverarbeitungseinrichtung |
| 12 | Ausgangs-Audiosignal |
| 14 | Ausgangswandler |
| 16 | Ausgangsschall |
| 18 | Sprachsignal |
| 20 | Schallanteile |
| 25 | erster Algorithmus |
| 26 | Sprachsignalanteil |
| 32 | erster Signalpfad |
| 33 | Kenngröße |
| 34 | zweiter Signalpfad |
| 35 | Kenngröße |
| 36 | Unterscheidung |
| 38 | dritter Signalpfad |
| 40 | Zeitstabilität |
| 41 | Kenngröße |
| 42 | vierter Signalpfad |
| 44 | Zeitraum |
| 45 | Kenngröße |
| 46 | zweiter Algorithmus |
| 47 | Hauptsignalpfad |
| 48 | Nebensignalpfad |
| 49 | Filterbank |
| 50 | binäres Maß |
| 51 | erster Wert (des binären Maßes) |
| 52 | zweiter Wert (des binären Maßes) |
| 53 | erster Parameterwert |
| 54 | zweiter Parameterwert |
| 56 | Analyse (auf Sprachanteile) |
| 58 | Synthesefilterbank |
| | |
| $\Delta E_{TS}$ | relative Änderung (der Energie am Übergang) |
| $\lambda_C$ | Schwerpunktwellenlänge |
| | |
| E1 | erste Energie |
| E2 | zweite Energie |
| Ev | Energie (vor dem Übergang) |
| En | Energie (nach dem Übergang) |
| fc | Grundfrequenz |
| G | Parameter |
| Gmin | minimaler Parameterwert |
| Gmax | maximaler Parameterwert |
| HF | höherer Frequenzbereich |
| LVL | Pegel |
| m | quantitatives Maß für Sprachqualität |
| $m_L$ | Grenzwert |
| $MN_{LVL}$ | zeitlicher Mittelwert (des Pegels) |
| $MX_{LVL}$ | Maximum des Pegels |

NF     niedriger Frequenzbereich
QE     Quotient
SNR    Signal-zu-Rausch-Verhältnis (SNR)
$Th_\lambda$    Grenzwert (für die Schwerpunktwellenlänge)
$Th_E$    Grenzwert (für relative Änderung der Energie)
$Th_{SNR}$   Grenzwert (für das SNR)
TS     Übergang
V     stimmhafte Zeitsequenz
VAD    Erkennung einer Sprachaktivität
UV    stimmlose Zeitsequenz

**Patentansprüche**

1. Verfahren zum Betrieb einer Hörvorrichtung (1) in Abhängigkeit eines Sprachsignals (18),

    - wobei mittels eines akusto-elektrischen Eingangswandlers (4) der Hörvorrichtung (1) ein das Sprachsignal (18) enthaltender Schall (6) aus einer Umgebung der Hörvorrichtung (1) aufgenommen und in ein Eingangs-Audiosignal (8) umgewandelt wird,
    - wobei mittels einer Signalverarbeitung anhand des Eingangs-Audiosignals (4) ein Ausgangs-Audiosignal (12) erzeugt wird,
    - wobei durch eine Analyse des Eingangs-Audiosignals (8) mittels der Signalverarbeitung mindestens eine artikulatorische Eigenschaft des Sprachsignals quantitativ erfasst wird, und in Abhängigkeit der besagten Eigenschaft ein quantitatives Maß (m) für eine Sprachqualität des Sprachsignals (18) abgeleitet wird, und
    - wobei wenigstens ein Parameter (G) der Signalverarbeitung zur Erzeugung des Ausgangs-Audiosignals (12) anhand des Eingangs-Audiosignals (8) in Abhängigkeit des quantitativen Maßes (m) für die Sprachqualität des Sprachsignals (18) eingestellt wird,

    **dadurch gekennzeichnet,**
    **dass** für das quantitative Maß (m) für die Sprachqualität als artikulatorische Eigenschaft des Sprachsignals (18)

    - eine mit der Präzision von vorgegebenen Formanten von Vokalen in dem Sprachsignal (18) korrelierte Kenngröße, und/oder
    - eine mit der Dominanz von Konsonanten, insbesondere Frikativen, in dem Sprachsignal (18) korrelierte Kenngröße (33) und/oder
    - eine mit der Präzision von Übergängen von stimmhaften und stimmlosen Lauten korrelierte Kenngröße (35)
    erfasst wird.

2. Verfahren nach Anspruch 1,

wobei als der wenigstens eine Parameter (G) der Signalverarbeitung

    - ein Verstärkungsfaktor, und/oder
    - ein Kompressionsverhältnis, und/oder
    - ein Kniepunkt einer Kompression, und/oder
    - eine Zeitkonstante einer automatischen Verstärkungsregelung, und/oder
    - eine Stärke einer Rauschunterdrückung, und/oder
    - eine Richtwirkung eines Richtsignals

in Abhängigkeit des quantitativen Maßes (m) für die Sprachqualität des Sprachsignals (18) eingestellt wird.

3. Verfahren nach Anspruch 2,
wobei

    - der Verstärkungsfaktor erhöht wird, bzw.
    - das Kompressionsverhältnis erhöht wird, bzw.
    - der Kniepunkt der Kompression abgesenkt wird, bzw.
    - die Zeitkonstante verkürzt wird, bzw.
    - die Rauschunterdrückung abgeschwächt wird, bzw.
    - die Richtwirkung erhöht wird,

wenn das quantitative Maß (m) eine Verschlechterung der Sprachqualität indiziert.

4. Verfahren nach Anspruch 2 oder Anspruch 3,
wobei

    - der Verstärkungsfaktor abgesenkt wird, bzw.
    - das Kompressionsverhältnis verringert wird, bzw.
    - der Kniepunkt der Kompression erhöht wird, bzw.
    - die Zeitkonstante verlängert wird, bzw.
    - die Rauschunterdrückung erhöht wird, bzw.
    - die Richtwirkung verringert wird,

wenn das quantitative Maß (m) eine Verbesserung der Sprachqualität indiziert.

5. Verfahren nach einem der vorhergehenden Ansprüche,

wobei eine Mehrzahl an Frequenzbändern (8a-8f) jeweils auf Signalanteile des Sprachsignals (18) hin untersucht wird, und
wobei das Einstellen des wenigstens einen Parameters (G) der Signalverarbeitung in Abhängigkeit des quantitativen Maßes (m) für die Sprachqualität des Sprachsignals (m) lediglich in denjenigen Frequenzbändern (8b, 8e) erfolgt, in welchen ein hinreichend hoher Signalanteil des Sprachsignals (18) ermittelt wird.

6. Verfahren nach einem der vorhergehenden Ansprüche,
wobei durch die Analyse des Eingangs-Audiosignals (8) mittels der Signalverarbeitung weiter mindestens eine prosodische Eigenschaft des Sprachsignals quantitativ erfasst wird, und das quantitative Maß (m) für die Sprachqualität des Sprachsignals (18) zusätzlich in Abhängigkeit der besagten prosodischen Eigenschaft abgeleitet wird.

7. Verfahren nach Anspruch 6,
wobei für das quantitative Maß (m) als prosodische Eigenschaft des Sprachsignals (18)

- eine mit einer Zeitstabilität (40) einer Grundfrequenz ($f_G$) des Sprachsignals (18) korrelierte Kenngröße (41) und/oder
- eine mit einer Schallintensität von Akzenten des Sprachsignals (18) korrelierte Kenngröße (45) erfasst wird.

8. Verfahren nach einem der vorhergehenden Ansprüche,

wobei für das quantitative Maß (m) für die Sprachqualität als eine artikulatorische Eigenschaft des Sprachsignals (18) eine mit einer Artikulation von Konsonanten korrelierte Kenngröße erfasst wird, und
wobei als der wenigstens eine Parameter (G) ein Verstärkungsfaktor wenigstens eines für die Bildung von Konsonanten charakteristischen Frequenzbandes angehoben wird, wenn das quantitative Maß (m) eine unzureichende Artikulation von Konsonanten indiziert.

9. Verfahren nach einem der vorhergehenden Ansprüche,

wobei als das quantitative Maß (m) ein binäres Maß abgeleitet wird, welches in Abhängigkeit der Sprachqualität einen ersten Wert (51) oder einen zweiten (52) Wert einnimmt,
wobei der erste Wert (51) einer hinreichend guten Sprachqualität des Sprachsignals (18) zugeordnet ist, und der zweite Wert (52) einer unzureichenden Sprachqualität des Sprachsignals (18) zugeordnet ist,
wobei für den ersten Wert (51) der wenigstens eine Parameter (G) der Signalverarbeitung auf einen ersten Parameterwert (53) voreingestellt wird, welcher einem regulären Modus der Signalverarbeitung entspricht, und
wobei für den zweiten Wert (52) der wenigstens eine Parameter (G) der Signalverarbeitung auf einen vom ersten Parameterwert (53) verschiedenen zweiten Parameterwert (54) eingestellt wird.

10. Verfahren nach Anspruch 9,
wobei für einen Übergang des quantitativen Maßes (m) vom ersten Wert (51) zum zweiten Wert (52) der wenigstens eine Parameter stetig vom ersten Parameterwert (53) zum zweiten Parameterwert (54) hin überblendet wird.

11. Verfahren nach einem der Ansprüche 1 bis 8,

wobei als das quantitative Maß (m) ein diskretes Maß abgeleitet wird, welches in Abhängigkeit der Sprachqualität einen Wert aus einem Wertebereich von wenigstens drei diskreten Werten einnimmt, und
wobei einzelne Werte des quantitativen Maßes (m) monoton auf entsprechende, diskrete Parameterwerte für den wenigstens einen Parameter (G) abgebildet werden.

12. Verfahren nach einem der Ansprüche 1 bis 8,

wobei als das quantitative Maß (m) ein stetiges Maß abgeleitet wird, welches in Abhängigkeit der Sprachqualität einen Wert aus einem kontinuierlichen Wertebereich einnimmt, und
wobei einzelne Werte des quantitativen Maßes (m) monoton auf entsprechende Parameterwerte aus einem kontinuierlichen Parameterintervall für den wenigstens einen Parameter (G) abgebildet werden.

13. Verfahren nach einem der vorhergehenden Ansprüche,

wobei eine Sprachaktivität (VAD) detektiert und/oder ein Signal-zu-Rausch-Verhältnis (SNR) im Eingangs-Audiosignal (18) ermittelt wird, und
wobei das Einstellen des wenigstens einen Parameters (G) der Signalverarbeitung zur Erzeugung des Ausgangs-Audiosignals (12) anhand des Eingangs-Audiosignals (8) in Abhängigkeit des quantitativen Maßes (m) für die Sprachqualität des Sprachsignals (18) zusätzlich in Abhängigkeit der detektierten Sprachaktivität (VAD) bzw. des ermittelten Signal-zu-Rausch-Verhältnisses (SNR) durchgeführt wird.

14. Hörvorrichtung (1), umfassend

- einen akusto-elektrischen Eingangswandler (4), welcher dazu eingerichtet ist, einen Schall (6) aus einer Umgebung der Hörvorrichtung (1) aufzunehmen und in ein Eingangs-Audiosignal

15

(8) umzuwandeln,
- eine Signalverarbeitungseinrichtung (10), welche dazu eingerichtet ist, aus dem Eingangs-Audiosignal (8) ein Ausgangs-Audiosignal (12) zu erzeugen, und
- einen elektro-akustischen Ausgangswandler (14), welcher dazu eingerichtet ist, das Ausgangs-Audiosignal (12) in einen Ausgangsschall (16) umzuwandeln,

wobei die Hörvorrichtung (1) zur Durchführung des Verfahrens nach einem der vorhergehenden Ansprüche eingerichtet ist.

**15.** Hörvorrichtung (1) nach Anspruch 14, ausgestaltet als ein Hörgerät (2).


**Claims**

**1.** Method for operating a hearing device (1) depending on a speech signal (18),

- wherein an acousto-electric input transducer (4) of the hearing device (1) records a sound (6) containing the speech signal (18) from the surroundings of the hearing device (1) and converts the sound into an input audio signal (8),
- wherein a signal processing operation generates an output audio signal (12) based on the input audio signal (4),
- wherein at least one articulatory property of the speech signal is quantitatively acquired through analysis of the input audio signal (8) by means of the signal processing operation, and a quantitative measure (m) of a speech quality of the voice signal (18) is derived on the basis of said property, and
- wherein at least one parameter (G) of the signal processing operation for generating the output audio signal (12) based on the input audio signal (8) is set on the basis of the quantitative measure (m) of the speech quality of the speech signal (18),

**characterized in that**
for the quantitative measure (m) of the speech quality, as the articulatory property of the speech signal (18)

- a characteristic variable correlated with the precision of predefined formants of vowels in the speech signal (18), and/or
- a characteristic variable (33) correlated with the dominance of consonants, in particular fricatives, in the speech signal (18) and/or
- a characteristic variable (35) correlated with the precision of transitions between voiced and unvoiced sounds
is acquired.

**2.** Method according to Claim 1,
where as the at least one parameter (G) of the signal processing operation

- a gain factor, and/or
- a compression ratio, and/or
- a knee point of a compression, and/or
- a time constant of an automatic gain control, and/or
- a magnitude of noise suppression, and/or
- a directivity of a directional signal
is set on the basis of the quantitative measure (m) for the speech quality of the speech signal (18).

**3.** Method according to Claim 2,
wherein

- the gain factor is increased, or
- the compression ratio is increased, or
- the knee point of the compression is lowered, or
- the time constant is shortened, or
- the noise suppression is attenuated, or
- the directivity is increased
if the quantitative measure (m) indicates a deterioration of the speech quality.

**4.** Method according to Claim 2 or Claim 3, wherein

- the gain factor is lowered, or
- the compression ratio is reduced, or
- the knee point of the compression is increased, or
- the time constant is lengthened, or
- the noise suppression is increased, or
- the directivity is reduced
if the quantitative measure (m) indicates an improvement of the speech quality.

**5.** Method according to any one of the preceding claims,

wherein a plurality of frequency bands (8a-8f) is examined for signal components of the speech signal (18) in each case, and
wherein the setting of the at least one parameter (G) of the signal processing operation on the basis of the quantitative measure (m) of the speech quality of the speech signal (m) is carried out only in those frequency bands (8b, 8e) in which a sufficiently high signal component of the speech signal (18) is ascertained.

**6.** Method according to any one of the preceding claims, wherein at least one prosodic property of the speech signal is also quantitatively acquired through analysis of the input audio signal (8) by means of the signal processing operation, and the quantitative measure (m) of the speech quality of the speech signal (18) is additionally derived as a function of said prosodic property.

7. Method according to Claim 6,
wherein for the quantitative measure (m) as the prosodic property of the speech signal (18)

    - a characteristic variable (41) correlated with a temporal stability (40) of a fundamental frequency ($f_G$) of the speech signal (18) and/or
    - a characteristic variable (45) correlated with a sound intensity of accents of the speech signal (18) is acquired.

8. Method according to any one of the preceding claims,

    wherein for the quantitative measure (m) of the speech quality as an articulatory property of the speech signal (18) a characteristic variable correlated with articulation of consonants is acquired, and
    wherein as the at least one parameter (G) a gain factor of at least one frequency band characteristic of the formation of consonants is boosted if the quantitative measure (m) indicates an insufficient articulation of consonants.

9. Method according to any one of the preceding claims,

    wherein as the quantitative measure (m) a binary measure is derived, which adopts a first value (51) or a second (52) value depending on the speech quality,
    wherein the first value (51) is assigned to a sufficiently good speech quality of the speech signal (18), and the second value (52) is assigned to an insufficient speech quality of the speech signal (18), wherein for the first value (51) the at least one parameter (G) of the signal processing operation is preset to a first parameter value (53), which corresponds to a regular mode of the signal processing operation, and wherein for the second value (52), the at least one parameter (G) of the signal processing is set to a second parameter value (54) different from the first parameter value (53).

10. Method according to Claim 9,
wherein for a transition of the quantitative measure (m) from the first value (51) to the second value (52) the at least one parameter is continuously faded from the first parameter value (53) to the second parameter value (54).

11. Method according to any one of Claims 1 to 8,

    wherein as the quantitative measure (m) a discrete measure is derived, which adopts a value from a value range of at least three discrete values depending on the speech quality, and
    wherein individual values of the quantitative measure (m) are monotonically mapped onto corresponding discrete parameter values for the at least one parameter (G).

12. Method according to any one of Claims 1 to 8,

    wherein as the quantitative measure (m) a constant measure is derived, which adopts a value from a continuous value range depending on the speech quality,
    and
    wherein individual values of the quantitative measure (m) are monotonically mapped onto corresponding parameter values from a continuous parameter interval for the at least one parameter (G).

13. Method according to any one of the preceding claims,

    wherein a speech activity (VAD) is detected and/or a signal-to-noise ratio (SNR) in the input audio signal (18) is ascertained, and
    wherein the setting of the at least one parameter (G) of the signal processing operation for generating the output audio signal (12) based on the input audio signal (8) on the basis of the quantitative measure (m) for the speech quality of the speech signal (18) is additionally carried out on the basis of the detected speech activity (VAD) and/or the ascertained signal-to-noise ratio (SNR).

14. Hearing device (1), comprising

    - an acousto-electric input transducer (4), which is configured to record a sound (6) from surroundings of the hearing device (1) and to convert the sound into an input audio signal (8),
    - a signal processing device (10), which is configured to generate an output audio signal (12) from the input audio signal (8), and
    - an electro-acoustic output transducer (14), which is configured to convert the output audio signal (12) into an output sound (16),

wherein the hearing device (1) is configured for carrying out the method according to any one of the preceding claims.

**15.** Hearing device (1) according to Claim 14, embodied as a hearing aid (2).

**Revendications**

**1.** Procédé de fonctionnement d'un dispositif auditif (1) en fonction d'un signal vocal (18),

- dans lequel un son (6) contenant le signal vocal (18) est reçu d'un environnement du dispositif auditif (1) au moyen d'un convertisseur d'entrée acousto-électrique (4) du dispositif auditif (1) et converti en un signal audio d'entrée (8),
- dans lequel un signal audio de sortie (12) est généré au moyen d'un traitement de signal sur la base du signal audio d'entrée (4),
- dans lequel au moins une propriété articulatoire du signal vocal est détectée quantitativement par analyse du signal audio d'entrée (8) au moyen d'un traitement de signal, et une mesure quantitative (m) reflétant une qualité vocale du signal vocal (18) est dérivée en fonction de ladite propriété, et
- au moins un paramètre (G) du traitement de signal destiné à générer le signal audio de sortie (12) étant réglé sur la base du signal audio d'entrée (8) en fonction de la mesure quantitative (m) reflétant la qualité vocale du signal vocal (18),

**caractérisé en ce que**,
pour la mesure quantitative (m) reflétant la qualité vocale, en tant que propriété articulatoire du signal vocal (18),

- une grandeur corrélée à la précision de formantes spécifiées de voyelles dans le signal vocal (18), et/ou
- une grandeur (33) corrélée à la dominance de consonnes, notamment fricatives, dans le signal vocal (18) et/ou
- une grandeur (35) corrélée à la précision de transitions entre des sons voisés et non voisés sont acquises.

**2.** Procédé selon la revendication 1,

- un facteur d'amplification, et/ou
- un taux de compression, et/ou
- un coude de compression, et/ou
- une constante de temps d'une régulation d'amplification automatique, et/ou
- une intensité de réduction de bruit, et/ou
- une directivité d'un signal directionnel étant réglés, en tant qu'au moins un paramètre (G) du traitement de signal, en fonction de la mesure quantitative (m) de la qualité vocale du signal vocal (18).

**3.** Procédé selon la revendication 2,

- le facteur d'amplification étant augmenté, ou
- le taux de compression étant augmenté, ou
- le coude de compression étant abaissé, ou
- la constante de temps étant réduite, ou
- la réduction de bruit étant affaiblie, ou
- la directivité étant augmentée,

si la mesure quantitative (m) indique une détérioration de la qualité vocale.

**4.** Procédé selon la revendication 2 ou la revendication 3,

- le facteur d'amplification étant réduit, ou
- le taux de compression étant réduit, ou
- le coude de compression étant augmenté, ou
- la constante de temps étant allongée, ou
- la réduction de bruit étant augmentée, ou
- la directivité étant réduite,

si la mesure quantitative (m) indique une amélioration de la qualité vocale.

**5.** Procédé selon l'une des revendications précédentes,

une pluralité de bandes de fréquences (8a à 8f) étant chacune examinées pour déterminer les composantes du signal vocal (18), et
le réglage de l'au moins un paramètre (G) du traitement de signal étant effectué en fonction de la mesure quantitative (m) de la qualité vocale du signal vocal (m) uniquement dans les bandes de fréquences (8b, 8e) dans lesquelles une composante suffisamment élevée du signal vocal (18) est déterminée.

**6.** Procédé selon l'une des revendications précédentes,
l'analyse du signal audio d'entrée (8) au moyen d'un traitement de signal permettant en outre de détecter quantitativement au moins une propriété prosodique du signal vocal, et la mesure quantitative (m) reflétant la qualité vocale du signal vocal (18) étant en outre dérivée en fonction de ladite propriété prosodique.

**7.** Procédé selon la revendication 6,

- une grandeur (41) corrélée à une stabilité temporelle (40) d'une fréquence fondamentale ($f_G$) du signal vocal (18) et/ou
- une grandeur (45) corrélée à une intensité sonore d'accents du signal vocal (18) étant détectées pour la mesure quantitative (m) en tant que propriété prosodique du signal vocal (18).

8. Procédé selon l'une des revendications précédentes,

une grandeur corrélée à une articulation de consonnes étant acquise, pour la mesure quantitative (m) reflétant la qualité vocale, en tant que propriété articulatoire du signal vocal (18), et un facteur d'amplification de l'au moins une bande de fréquences caractéristique de la formation de consonnes étant augmenté en tant qu'au moins une grandeur (G) si la mesure quantitative (m) indique une articulation insuffisante des consonnes.

9. Procédé selon l'une des revendications précédentes,

une mesure binaire, qui prend une première valeur (51) ou une deuxième valeur (52) en fonction de la qualité vocale, étant dérivée comme mesure quantitative (m),
la première valeur (51) étant associée à une qualité vocale suffisamment bonne du signal vocal (18) et la deuxième valeur (52) étant associée à une qualité vocale insuffisante du signal vocal (18),
pour la première valeur (51) l'au moins un paramètre (G) du traitement de signal étant préréglé à une première valeur de paramètre (53) qui correspond à un mode normal du traitement de signal, et
pour la deuxième valeur (52) l'au moins un paramètre (G) du traitement de signal étant réglé à une deuxième valeur de paramètre (54) différente de la première valeur de paramètre (53).

10. Procédé selon la revendication 9,
en ce qui concerne une transition de la mesure quantitative (m) de la première valeur (51) à la deuxième valeur (52), l'au moins un paramètre passant progressivement de la première valeur de paramètre (53) à la deuxième valeur de paramètre (54).

11. Procédé selon l'une des revendications 1 à 8,

une mesure discrète, qui prend une valeur dans une gamme de valeurs d'au moins trois valeurs discrètes en fonction de la qualité vocale, étant dérivée en tant que mesure quantitative (m), et une relation de manière monotone étant établie entre des valeurs individuelles de la mesure quantitative (m) et des valeurs de paramètre discrètes correspondantes pour au moins un paramètre (G).

12. Procédé selon l'une des revendications 1 à 8,

une mesure continue, qui prend une valeur dans une gamme de valeurs continue en fonction de la qualité vocale, étant dérivée en tant que mesure quantitative (m), et
une relation monotone étant établie entre des valeurs individuelles de la mesure quantitative (m) et des valeurs de paramètre correspondantes à partir d'un intervalle de paramètres continu pour l'au moins un paramètre (G).

13. Procédé selon l'une des revendications précédentes,

une activité vocale (VAD) étant détectée et/ou un rapport signal sur bruit (SNR) étant déterminé dans le signal audio d'entrée (18), et
le réglage de l'au moins un paramètre (G) du traitement de signal destiné à la génération du signal audio de sortie (12) sur la base du signal audio d'entrée (8) en fonction de la mesure quantitative (m) reflétant la qualité vocale du signal vocal (18) étant en outre effectué en fonction de l'activité vocale détectée (VAD) ou du rapport signal/bruit (SNR).

14. Dispositif auditif (1), comprenant

- un convertisseur d'entrée acousto-électrique (4) qui est conçu pour recevoir le son (6) provenant d'un environnement du dispositif auditif (1) et pour le convertir en un signal audio d'entrée (8),
- un module de traitement de signal (10), qui est conçu pour générer un signal audio de sortie (12) à partir du signal audio d'entrée (8), et
- un convertisseur de sortie électro-acoustique (14) qui est conçu pour convertir le signal audio de sortie (12) en un son de sortie (16),

le dispositif auditif (1) étant conçu pour mettre en œuvre le procédé selon l'une des revendications précédentes.

15. Dispositif auditif (1) selon la revendication 14, lequel est conçu comme une aide auditive (2).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20180255406 A1
- US 7165025 B
- US 20040167774 A1

**In der Beschreibung aufgeführte Nicht-Patentliteratur**

- Nonintrusive Speech Intelligibility Prediction Using Convolutional Neural Networks. **A. H. ANDERSEN et al.** IEEE/ACM Transactions on Audio, Speech and Language Processing. IEEE, 01. Oktober 2018, vol. 26, 1925-1939